# EUROPÄISCHE PATENTSCHRIFT

(11) **EP 2 714 310 B1**
(45) Veröffentlichungstag und Bekanntmachung des Hinweises auf die Patenterteilung: **13.07.2016**
(21) Anmeldenummer: 12723440.9
(22) Anmeldetag: 18.05.2012
(51) Int. Cl.: B23B 3/30, B23Q 39/02, B23B 3/16

(54) **WERKZEUGMASCHINE**
MACHINE TOOL
MACHINE-OUTIL

(30) Priorität: 31.05.2011 DE 102011076835
(43) Veröffentlichungstag der Anmeldung: 09.04.2014
(73) Patentinhaber: Gildemeister Italiana S.p.A., 24030 Brembate di Sopra (BG) (IT)
(72) Erfinder: WALZ, Jürgen, 72636 Frickenhausen (DE); RIGOLONE, Franco, I-24010 Ponteranica (BG) (IT); DEURINGER, Gottfried, 82538 Geretsried (DE); ROTA, Renato, I-24030 Carvico (BG) (IT); GERST, Manuel, 33619 Bielefeld (DE)
(74) Vertreter: MERH-IP Matias Erny Reichl Hoffmann Patentanwälte PartG mbB
(86) Internationale Anmeldenummer: PCT/EP2012/059282
(87) Internationale Veröffentlichungsnummer: WO 2012/163697

(56) Entgegenhaltungen:
- DE-A1- 10 116 994
- DE-A1- 19 959 961
- DE-A1-102006 013 783
- US-A- 5 127 140

## Beschreibung

Die vorliegende Erfindung betrifft einen Werkzeugträger für eine Werkzeugmaschine, insbesondere Drehmaschine, mit einem um eine erste Revolverachse drehbar gelagerten, werkzeugtragenden Werkzeugrevolverkopf. Weiterhin betrifft die vorliegende Erfindung eine Werkzeugmaschine, insbesondere Drehmaschine, mit einem derartigen Werkzeugträger.

### Hintergrund der Erfindung

Gattungsgemäße Werkzeugmaschinen mit gattungsgemäßen Werkzeugträgern umfassen ein Maschinengestell, an dem eine Arbeitsspindel oder auch zwei aufeinander zugewandte Arbeitsspindeln mit parallelen bzw. koaxialen Spindelachsen vorgesehen sein können, wobei an den Arbeitsspindeln jeweils Werkstücke zur Bearbeitung an der Werkzeugmaschine aufgenommen werden können. Für die Bereitstellung der Werkzeuge zur Bearbeitung werden meist ein oder mehr Werkzeugträger vorgesehen, die auf an dem Maschinengestell angeordneten, verfahrbaren Werkzeugschlitten, insbesondere Kreuzschlitten, bereitgestellt sind und mittels einer oder mehrerer Linearachsen relativ zu den Arbeitsspindeln verfahren werden können (z.B. in X-, Y- oder Z-Richtung verfahrbar). Derartige gattungsgemäße Werkzeugmaschinen sind z.B. aus der DD 279 429 A1 oder auch der EP 0 999 002 A1 bekannt.

Generell besteht bei derartigen gattungsgemäßen Werkzeugmaschinen die Anforderung, die Werkzeugmaschine derart bereitzustellen, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine.

Der Erfindung liegt somit die Aufgabe zugrunde, einen Werkzeugträger für eine Werkzeugmaschine bzw. eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen ermöglicht wird, bei gleichzeitiger kompakter und kostengünstiger Bauweise der Werkzeugmaschine und mit für den Bearbeiter bzw. Bediener der Werkzeugmaschine möglichst gut einsehbarem Bearbeitungsraum.

US 5,127,140 betrifft eine numerisch gesteuerte Drehmaschine gemäß dem Oberbegriff des Anspruchs 1. Beispielhaft umfasst die Drehmaschine zwei koaxial ausgerichtete Spindeln und drei Werkzeughalter, wobei zwei Spindelstöcke sich gegenüberliegend angeordnet sind, und wobei jeder der Werkzeughalter in zwei Richtungen verfahrbar ist. Weitere Drehmaschinen mit zwei koaxial ausgerichteten Spindeln sind z.B. aus DE 10 2006 013 783 A1 und DE 10116 994 A1 bekannt.

DE 199 59 961 A1 betrifft eine Drehmaschine, umfassend ein Maschinengestell, eine erste Werkstückspindel mit einer ungefähr vertikal ausgerichteten ersten Spindelachse und einer ersten Werkstückaufnahme, ein erstes Schlittensystem zum Bewegen der ersten Werkstückspindel relativ zum Maschinengestell quer zu ihrer Spindelachse und in Richtung der Spindelachse, einen ersten Werkzeugträger zum Bearbeiten eines in der ersten Werkstückspindel aufgenommenen Werkstücks, eine zweite Werkstückspindel mit einer ungefähr vertikal ausgerichteten zweiten Spindelachse und einer, der ersten Werkstückaufnahme zugewandt angeordneten zweiten Werkstückaufnahme, ein zweites Schlittensystem zum Bewegen der zweiten Werkstückspindel relativ zum Maschinengestell quer zu ihrer Spindelachse, einen zweiten Werkzeugträger zum Bearbeiten des in der zweiten Werkstückspindel aufgenommenen Werkstücks, wobei die erste Werkstückspindel und die zweite Werkstückspindel durch Verfahren der Schlittensysteme quer zu den jeweiligen Spindelachsen in eine Übergabeposition bringbar sind.

### Zusammenfassung der Erfindung

Zur Lösung der vorstehend genannten Aufgabe wird gemäß der vorliegenden Erfindung eine Werkzeugmaschine gemäß dem unabhängigen Anspruch 1 vorgeschlagen. Abhängige Ansprüche betreffen bevorzugte Ausgestaltungen gemäß der vorliegenden Erfindung.

Hierbei liegt der Erfindung die Idee zugrunde, einen Werkzeugträger mit einer numerisch steuerbaren Drehachse bereitzustellen, an dem zwei relativ zur Rotationsachse der Drehachse auf gegenüberliegenden Seiten des Werkzeugträgers angeordnete Werkzeugrevolver vorgesehen sind. Mittels der rotatorisch steuerbaren Drehachse kann der Werkzeugträger rotiert werden, so dass sowohl Werkzeuge des ersten Werkzeugrevolvers mit einer Arbeitsspindel der Werkzeugmaschine ausgerichtet werden können, als auch Werkzeuge des zweiten Werkzeugrevolvers mit der Arbeitsspindel der Werkzeugmaschine ausgerichtet werden können. Somit kann mittels eines einzigen Werkzeugträgers bereits eine große Anzahl flexibel einsetzbarer Werkzeuge an der Werkzeugmaschine bereitgestellt werden.

Zudem ist es besonders vorteilhaft möglich, einen erfindungsgemäßen Werkzeugträger an Doppel-Spindeldrehmaschinen vorzusehen, die zwei parallel bzw. koaxial angeordnete, aufeinander zugewandte Arbeitsspindeln aufweisen, derart, dass durch Rotation des Werkzeugträgers mittels der Drehachse sowohl Konstellationen möglich sind, bei denen Werkstücke an den beiden Arbeitsspindeln gleichzeitig mit gegenüberliegenden Werkzeugen an einem der beiden Werkzeugrevolver des Werkzeugträgers bearbeitet werden können, als auch Konstellationen, bei denen Werkstücke an den beiden Arbeitsspindeln gleichzeitig jeweils durch ein Werkzeug des jeweiligen ersten Werkzeugrevolvers oder zweiten Werkzeugrevolvers bearbeitet werden können. Folglich ist es mit einem erfindungsgemäßen Werkzeugträger vorteilhaft möglich, bei sehr kompakter Bauweise mittels nur eines Werkzeugträgers bereits eine Vielzahl von unterschiedlichen Bearbeitungsmöglichkeiten mit einer Vielzahl von unterschiedlichen Werkzeugen bereitzustellen.

Erfindungsgemäß wird auf Grundlage des vorstehend beschriebenen Erfindungsgedankens ein Werkzeugträger für eine Werkzeugmaschine, insbesondere Drehmaschine, vorgeschlagen, der eine numerisch steuerbare Drehachse zum Rotieren des Werkzeugträgers, einen um eine erste Revolverachse drehbar gelagerten, werkzeugtragenden ersten Werkzeugrevolverkopf und einem um eine zweite Revolverachse drehbar gelagerten, werkzeugtragenden zweiten Werkzeugrevolverkopf umfasst. Weiterhin ist erfindungsgemäß vorgesehen, dass der erste Werkzeugrevolverkopf und der zweite Werkzeugrevolverkopf relativ zur Rotationsachse der Drehachse auf gegenüberliegenden Seiten des Werkzeugträgers angeordnet sind.

Der erfindungsgemäße Werkzeugträger erlaubt folglich eine effiziente Bearbeitung der Werkstücke mit möglichst vielen, möglichst gleichzeitig einsetzbaren Werkzeugen in unterschiedlichsten Konstellationen, da auf kompakte Weise ein Werkzeugträger mit zwei vorteilhaft angeordneten Werkzeugrevolvern zur Bearbeitung der Werkstücke an der/den Arbeitsspindeln zur Verfügung steht, wobei durch etwaige separat steuerbare Werkzeugschlitten eine äußerst hohe Flexibilität bezüglich der Steuerung der relativen Bewegungen zwischen den Werkzeugen und den in den Arbeitsspindeln aufgenommenen Werkzeugen ermöglicht werden kann.

Im Folgenden werden bevorzugte Ausführungsformen der vorliegenden Erfindung beschrieben. Diese können einzeln realisiert werden oder in Kombination, um weitere bevorzugte Ausführungsformen der vorliegenden Erfindung zu schaffen.

Vorzugsweise ist die erste Revolverachse parallel, insbesondere koaxial, mit der zweiten Revolverachse ausgerichtet. Somit kann der Werkzeugträger vorteilhaft noch wesentlich kompakter gestaltet werden und ermöglicht eine weitere Verbesserung der Flexibilität bezüglich der Steuerung der relativen Bewegungen zwischen den Werkzeugen und den in den Arbeitsspindeln aufgenommenen Werkzeugen.

Vorzugsweise ist die erste Revolverachse des ersten Werkzeugrevolverkopfs und/oder die zweite Revolverachse des zweiten Werkzeugrevolverkopfs quer, insbesondere senkrecht, zur Rotationsachse der Drehachse ausgerichtet. Dies verbessert die Werkzeugbereitstellungs- bzw. Werkzeugausrichtfähigkeiten des Werkzeugträgers deutlich, da die Orientierung der ersten bzw. zweiten Revolverachse dann durch Drehen des Werkzeugträgers mittels der Drehachse kontinuierlich geändert werden kann. Somit wird ermöglicht, eine weitere Verbesserung der Flexibilität bezüglich der Steuerung der relativen Bewegungen zwischen den Werkzeugen und den in den Arbeitsspindeln aufgenommenen Werkzeugen bereitzustellen.

In einer besonders zweckmäßigen bevorzugten Ausführung umfasst der Werkzeugträger weiterhin eine numerisch steuerbare Linearachse zum Verfahren der ersten und zweiten Revolverköpfe in Richtung parallel zur Rotationsachse der Drehachse. Hierbei ist die Linearachse zugunsten einer besonders einfachen und kompakten Bauweise vorzugsweise als Teleskoplinearachse ausgebildet. Somit kann die Linearachse äußerst kompakt bereitgestellt werden und ermöglicht eine weitere Verbesserung der Flexibilität bezüglich der Steuerung der relativen Bewegungen zwischen den Werkzeugen und den in den Arbeitsspindeln aufgenommenen Werkzeugen.

Vorzugsweise umfasst der Werkzeugträger weiterhin ein Antriebsgehäuse, in dem ein Drehachsantrieb und/oder ein optionaler Linearachsantrieb angeordnet sind. Somit kann die Bauweise noch kompakter ausgestaltet werden, insbesondere, wenn der Drehachsantrieb und der optionale Linearachsantrieb in einem Gehäuse untergebracht sind.

Gemäß einer besonders zweckmäßigen bevorzugten Ausführung ist der erste Werkzeugrevolverkopf als Radial-Revolverkopf ausgebildet, wobei Aufnahmen für Werkzeuge bzw. Werkzeughalter vorzugsweise umfangseitig auf dem ersten Werkzeugrevolverkopf angeordnet sind, und/oder der zweite Werkzeugrevolverkopf ist vorzugsweise als Radial-Revolverkopf ausgebildet, wobei Aufnahmen für Werkzeuge bzw. Werkzeughalter vorzugsweise umfangseitig auf dem zweiten Werkzeugrevolverkopf angeordnet sind. Dies hat den Vorteil, dass die Werkzeuge aufgrund der radialen Anordnung der Aufnahmen zum Aufnehmen von Werkzeugen oder werkzeugtragenden Werkzeughaltern durch Rotation um die Revolverachse je nach Orientierung der Revolverachse radial, axial und auch schräg auf die Werkstückaufnahmen der Arbeitsspindeln bzw. auf die Spindelachsen ausgerichtet werden können.

Gemäß eines weiteren Aspekts der vorliegenden Erfindung wird weiterhin eine Werkzeugmaschine, insbesondere Drehmaschine, vorgeschlagen, die einen ersten Werkzeugträger gemäß einem der vorhergehend beschriebenen Ausführungen umfasst.

Die Werkzeugmaschine umfasst vorzugsweise ein Maschinengestell und eine an dem Maschinengestell angeordnete erste Arbeitsspindel zur Aufnahme eines ersten Werkstücks. Der erste Werkzeugträger ist vorzugsweise an dem Maschinengestell angeordnet, und ist vorzugsweise dazu eingerichtet, ein an dem Werkzeugträger gehaltenes Werkzeug mit einem an der ersten Arbeitsspindel aufgenommenen ersten Werkstück zur Bearbeitung des Werkstücks auszurichten.

Vorzugsweise ist die Drehachse des ersten Werkzeugträgers quer, insbesondere senkrecht, zu der Spindelachse der ersten Arbeitsspindel ausgerichtet. Vorzugsweise sind die Revolverachsen der ersten und zweiten Werkzeugrevolverköpfe dann durch Drehen des ersten Werkzeugträgers um die Drehachse quer zu der Spindelachse der ersten Arbeitsspindel ausrichtbar. Weiterhin sind die Revolverachsen der ersten und zweiten Werkzeugrevolverköpfe dann vorzugsweise durch Drehen des ersten Werkzeugträgers um die Drehachse parallel mit der Spindelachse der ersten Arbeitsspindel ausrichtbar. Insbesondere sind die Revolverachsen der ersten und zweiten Werkzeugrevolverköpfe vorzugsweise durch Drehen des ersten Werkzeugträgers um die Drehachse mit beliebigem Winkel zu der Spindelachse der ersten Arbeitsspindel ausrichtbar.

Gemäß einer besonders zweckmäßigen Ausführung umfasst die Werkzeugmaschine weiterhin einen an dem Maschinengestell angeordneten ersten Werkzeugträgerschlitten, auf dem der erste Werkzeugträger angeordnet ist. Der erste Werkzeugträgerschlitten ist hierbei vorzugsweise in einer ersten Richtung quer, insbesondere senkrecht, zu der Spindelachse der ersten Arbeitsspindel verfahrbar.

Gemäß einer weiteren besonders zweckmäßigen Ausführung umfasst die Werkzeugmaschine weiterhin eine der ersten Arbeitsspindel zugewandte, an dem Maschinengestell angeordnete zweite Arbeitsspindel zur Aufnahme eines zweiten Werkstücks, wobei die Spindelachse der zweiten Arbeitsspindel vorzugsweise parallel, insbesondere koaxial, zu der Spindelachse der ersten Arbeitsspindel ausgerichtet ist. Vorzugsweise ist der erste Werkzeugträger hierbei zwischen der ersten Arbeitsspindel und der zweiten Arbeitsspindel angeordnet. Somit kann die Werkzeugmaschine vorteilhaft noch wesentlich kompakter gestaltet werden.

Vorzugsweise weist der erste Werkzeugrevolverkopf eine Mehrzahl von Aufnahmen zum Aufnehmen von Werkzeugen oder werkzeughaltenden Werkzeughaltern auf, wobei der erste Werkzeugträger vorzugsweise dazu eingerichtet ist, eine Aufnahme des ersten Werkzeugrevolverkopfes durch Rotation des ersten Werkzeugrevolverkopfes um die erste Revolverachse auf ein an einer der Arbeitsspindeln aufgenommenes Werkstück auszurichten. Hierbei sind die Aufnahmen vorzugsweise jeweils paarweise relativ zur ersten Revolverachse auf gegenüberliegenden Seiten auf dem ersten Werkzeugrevolverkopf angeordnet, vorzugsweise derart, dass jeweils eine Aufnahme mit der zweiten Arbeitsspindel ausrichtbar ist, indem eine andere, gegenüberliegende Aufnahme mit der ersten Arbeitsspindel ausgerichtet wird, wenn die erste Revolverachse quer, insbesondere senkrecht, zu den Spindelachsen ausgerichtet ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise weist der zweite Werkzeugrevolverkopf eine Mehrzahl von Aufnahmen zum Aufnehmen von Werkzeugen oder werkzeughaltenden Werkzeughaltern auf, wobei der erste Werkzeugträger vorzugsweise dazu eingerichtet ist, eine Aufnahme des zweiten Werkzeugrevolverkopfes durch Rotation des zweiten Werkzeugrevolverkopfes um die zweite Revolverachse auf ein an einer der Arbeitsspindeln aufgenommenes Werkstück auszurichten. Hierbei sind die Aufnahmen vorzugsweise jeweils paarweise relativ zur zweiten Revolverachse auf gegenüberliegenden Seiten auf dem zweiten Werkzeugrevolverkopf angeordnet, vorzugsweise derart, dass jeweils eine Aufnahme mit der ersten Arbeitsspindel ausrichtbar ist, indem eine andere, gegenüberliegende Aufnahme mit der zweiten Arbeitsspindel ausgerichtet wird, wenn die zweite Revolverachse quer, insbesondere senkrecht, zu den Spindelachsen ausgerichtet ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise ist eine Aufnahme des ersten Werkzeugrevolverkopfes insbesondere auf ein an der ersten Arbeitsspindel aufgenommenes Werkstück ausrichtbar, indem eine Aufnahme des zweiten Werkzeugrevolverkopfes auf ein an der zweiten Arbeitsspindel aufgenommenes Werkstück ausgerichtet wird, wenn zumindest eine der ersten und zweiten Revolverachsen parallel zu den Spindelachsen ausgerichtet ist. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise umfasst das Maschinengestell einen eine erste Werkzeugträgerseite aufweisenden ersten Trägerabschnitt, einen eine zweite Werkzeugträgerseite aufweisenden zweiten Trägerabschnitt und einen zwischen dem ersten und dem zweiten Trägerabschnitt angeordneten Mittelabschnitt, der eine dritte Werkzeugträgerseite aufweist. Die erste Werkzeugträgerseite des ersten Trägerabschnitts und die zweite Werkzeugträgerseite des zweiten Trägerabschnitts sind hierbei vorzugsweise auf einer gleichen ersten Seite des Maschinengestells angeordnet, und die dritte Werkzeugträgerseite des Mittelabschnitts ist vorzugsweise auf einer im Wesentlichen senkrecht oder schräg zur ersten Seite des Maschinengestells angeordneten zweiten Seite des Maschinengestells angeordnet. Somit kann die Werkzeugmaschine vorteilhaft noch wesentlich kompakter gestaltet werden.

Vorzugsweise ist die erste Arbeitsspindel auf dem ersten Trägerabschnitt angeordnet und die zweite Arbeitsspindel ist vorzugsweise auf dem zweiten Trägerabschnitt angeordnet. Somit kann die Werkzeugmaschine vorteilhaft noch wesentlich kompakter gestaltet werden.

Vorzugsweise ist ein quer zu den Spindelachsen verfahrbarer erster Werkzeugträgerschlitten auf der dritten Werkzeugträgerseite des Mittelabschnitts angeordnet, wobei der erste Werkzeugträger vorzugsweise auf dem ersten Werkzeugträgerschlitten angeordnet ist. Somit kann die Werkzeugmaschine vorteilhaft noch wesentlich kompakter gestaltet werden.

Vorzugsweise weist der Mittelabschnitt zwischen einer ersten und einer zweiten Führung eine Ausnehmung aus, in die sich ein Gehäuse der Drehachse des ersten Werkzeugträgers hinein erstreckt. Somit kann die Werkzeugmaschine vorteilhaft noch wesentlich kompakter gestaltet werden.

Vorzugsweise ist die erste und/oder eine zweite Arbeitsspindel in Richtung der Spindelachse verfahrbar. Somit kann eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise umfasst die Werkzeugmaschine weiterhin einen auf der ersten Werkzeugträgerseite des ersten Trägerabschnitts angeordneten zweiten Werkzeugträgerschlitten, auf dem ein zweiter Werkzeugträger angeordnet ist, und/oder einen auf der zweiten Werkzeugträgerseite des zweiten Trägerabschnitts angeordneten dritten Werkzeugträgerschlitten, auf dem ein dritter Werkzeugträger angeordnet ist. Hierbei ist der zweite und/oder dritte Werkzeugträgerschlitten vorzugsweise parallel oder quer, insbesondere senkrecht, zu den Spindelachsen verfahrbar. Insbesondere ist der zweite und/oder dritte Werkzeugträger vorzugsweise in einer ersten Richtung quer zu den Spindelachsen verfahrbar, in einer zweiten Richtung quer zu der ersten Richtung und quer zu den Spindelachsen verfahrbar und/oder in einer dritten Richtung parallel zu den Spindelachsen verfahrbar. Somit kann die Werkzeugbereitstellung an der Werkzeugmaschine verbessert werden sowie eine weitere wesentliche Verbesserung der Flexibilität bezüglich der Steuerung der relativen Bewegungen zwischen den Werkzeugen und den in den Arbeitsspindeln aufgenommenen Werkzeugen ermöglicht werden.

Vorzugsweise ist der zweite und/oder dritte Werkzeugträger als Werkzeugrevolver ausgebildet, der zumindest einen um eine parallel zu den Spindelachsen ausgerichtete Revolverachse drehbar gelagerten, werkzeugtragenden Revolverkopf umfasst. Natürlich kann auch der zweite und/oder dritte Werkzeugträger in weiteren Ausführungsbeispielen als erfindungsgemäßer Werkzeugträger mit Drehachse und zwei Werkzeugrevolvern ausgebildet sein, die relativ zur Drehachse auf gegenüberliegenden Seiten auf dem Werkzeugträger angeordnet sind.

Vorzugsweise spannen die erste Werkzeugträgerseite des ersten Trägerabschnitts und die zweite Werkzeugträgerseite des zweiten Trägerabschnitts im Wesentlichen eine erste Ebene auf und vorzugsweise spannt die dritte Werkzeugträgerseite des Mittelabschnitts im Wesentlichen eine zur ersten Ebene senkrecht oder schräg ausgerichtete zweite Ebene auf. Hierbei ist die zweite Ebene vorzugsweise relativ zur zweiten Seite der ersten und zweiten Trägerabschnitte des Maschinengestells zum Maschinengestell hin eingerückt.

Somit kann auf besonders zweckmäßige und kompakte Weise eine Maschinengestellkonstruktion bzw. ein Maschinengestellaufbau bereitgestellt werden, bei der der erste Werkzeugschlitten für den ersten Werkzeugträger kompakt in einer Vertiefung bzw. Einbuchtung (die ggf. wie vorstehend beschrieben vorteilhaft einen Bearbeitungsraum im Maschinengestell definieren kann) zwischen den Arbeitsspindeln bzw. zwischen den Trägerabschnitten des Maschinengestells angeordnet werden kann.

Zudem kann zwischen den Trägerabschnitten auf einfache und kompakte Weise ein gut einsehbarer, in Einsehrichtung geöffneter bzw. einseitig geöffneter Bearbeitungsraum geschaffen werden. Bei vertikaler Ausrichtung der Trägerabschnitte, bei der die Spindelachsen horizontal ausgerichtet sind und die erste Richtung im Wesentlichen vertikal zwischen den Trägerabschnitten verläuft, kann weiterhin bei dieser Bauweise eine besonders zweckmäßige Fallschneise für Späne unterhalb der Arbeitsspindeln und der Werkzeugträger geschaffen werden.

Zusammenfassend ermöglicht es die vorliegende Erfindung einen Werkzeugträger bzw. eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen bei gleichzeitiger kompakter Bauweise der Werkzeugmaschine ermöglicht wird.

### Kurzbeschreibung der Figuren

**Fig.1** zeigt beispielhaft eine schematische Darstellung einer Perspektivansicht des Maschinengestellaufbaus einer Werkzeugmaschine gemäß einer bevorzugten Ausgestaltung für einen Werkzeugträger gemäß der vorliegenden Erfindung.
**Fig. 2** zeigt beispielhaft eine schematische Darstellung einer Vorderansicht einer Werkzeugmaschine gemäß einer bevorzugten Ausführungsform der vorliegenden Erfindung.
**Fig.3** zeigt beispielhaft eine schematische Darstellung einer Draufsicht der Werkzeugmaschine gemäß der bevorzugten Ausführungsform der vorliegenden Erfindung aus **Fig. 2****.**
**Fig. 4** zeigt beispielhaft eine schematische Darstellung einer Detailansicht des Bearbeitungsraums der Werkzeugmaschine gemäß der bevorzugten Ausführungsform der vorliegenden Erfindung aus **Fig. 2****.**
**Fig. 5** zeigt beispielhaft eine weitere schematische Darstellung einer Detailansicht des Bearbeitungsraums der Werkzeugmaschine gemäß der bevorzugten Ausführungsform der vorliegenden Erfindung aus **Fig. 2****.**
**Figs. 6A** bis **6E** zeigen beispielhaft weitere schematische Darstellungen einer Detailansicht des Bearbeitungsraums der Werkzeugmaschine gemäß der bevorzugten Ausführungsform der vorliegenden Erfindung aus **Fig. 2** zur Visualisierung der Orientierbarkeit des ersten Werkzeugträgers.
**Fig.7** zeigt beispielhaft eine weitere schematische Darstellung einer Detailansicht des Bearbeitungsraums der Werkzeugmaschine gemäß der bevorzugten Ausführungsform der vorliegenden Erfindung aus **Fig. 2** im Zusammenhang mit einer Reitstock-Anwendung.

### Ausführliche Beschreibung bevorzugter

### Ausführungsbeispiele der vorliegenden Erfindung

Im Folgenden werden bevorzugte Ausführungsbeispiele der vorliegenden Erfindung unter Bezugnahme auf die beigefügten Figuren detailliert beschrieben. Die vorliegende Erfindung ist jedoch nicht auf die beschriebenen Ausführungsbeispiele beschränkt. Die vorliegende Erfindung ist durch den Umfang der Patentansprüche definiert. Gleiche bzw. ähnliche Merkmale der Ausführungsbeispiele werden in den Figuren mit gleichen Bezugsziffern gekennzeichnet.

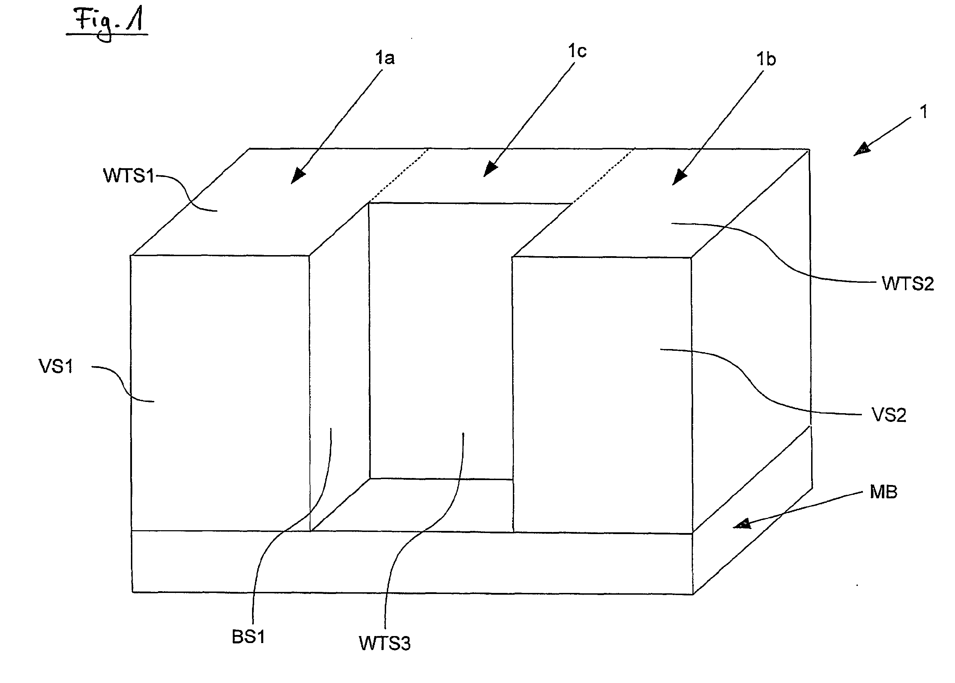

**Fig. 1** zeigt beispielhaft eine schematische Darstellung einer Perspektivansicht des Maschinengestellaufbaus der Werkzeugmaschine gemäß einer bevorzugten Ausgestaltung. Das Maschinengestell 1 weist einen ersten Trägerabschnitt 1a, einen zweiten Trägerabschnitt 1b und einen zwischen dem ersten und dem zweiten Trägerabschnitt 1a und 1b angeordneten Mittelabschnitt 1c auf.

Wie in **Fig. 1** gezeigt, weist der erste Trägerabschnitt 1a beispielhaft eine erste Vorderseite VS1 und eine erste Werkzeugträgerseite WTS1 auf, die im Wesentlichen in senkrecht zueinander stehenden Ebenen liegen. Der zweite Trägerabschnitt 1b weist analog zu dem ersten Trägerabschnitt 1a beispielhaft eine zweite Vorderseite VS2 und eine zweite Werkzeugträgerseite WTS2 auf, die im Wesentlichen in senkrecht zueinander stehenden Ebenen liegen.

Gemäß **Fig. 1** spannen die erste Werkzeugträgerseite WTS1 des ersten Trägerabschnitts 1a und die zweite Werkzeugträgerseite WTS2 des zweiten Trägerabschnitts 1b im Wesentlichen eine erste Ebene auf, und die erste Vorderseite VS1 des ersten Trägerabschnitts 1a und die zweite Vorderseite VS2 des zweiten Trägerabschnitts 1b spannen im Wesentlichen eine zweite Ebene auf, wobei die erste Ebene beispielhaft im Wesentlichen senkrecht zur zweiten Ebene ausgerichtet ist. Die erste Ebene kann in anderen Ausführungsformen auch schräg zur zweiten Ebene ausgerichtet sein.

Gemäß der Ausführung nach **Fig. 1** sind die erste Werkzeugträgerseite WTS1 des ersten Trägerabschnitts 1a und die zweite Werkzeugträgerseite WTS2 des zweiten Trägerabschnitts 1b auf der oberen Seite des Maschinengestells 1 angeordnet, und die erste Vorderseite VS1 des ersten Trägerabschnitts 1a und die zweite Vorderträgerseite VS2 des zweiten Trägerabschnitts 1b sind auf der vorderen Seite des Maschinengestells 1 angeordnet. Auf der unteren Seite weist das Maschinengestell einen Maschinenbasisabschnitt MB auf, der eine Stellfläche für die Werkzeugmaschine aufweist. In anderen Ausführungen kann das Maschinengestell auch anders orientiert sein, z.B. derart, dass die Werkzeugträgerseiten WTS1 und WTS2 auf der Vorder- oder Rückseite des Gestells 1 angeordnet sind.

Der zwischen den Trägerabschnitten 1a und 1b angeordnete Mittelabschnitt 1c des Maschinengestells 1 weist eine dritte Werkzeugträgerseite WTS3 auf. Die dritte Werkzeugträgerseite WTS3 des Mittelabschnitts 1c spannt im Wesentlichen eine zur zweiten Ebene der ersten und zweiten Vorderseiten VS1 und VS2 parallel ausgerichtete dritte Ebene auf, wobei die dritte Ebene relativ zur zweiten Ebene der ersten und zweiten Vorderseiten VS1 und VS2 zum Maschinengestell 1 hin eingerückt ist, d.h. zum Maschinengestell 1 hin insbesondere parallelverschoben ist.

Die erste Werkzeugträgerseite WTS1 des ersten Trägerabschnitts 1a und die zweite Werkzeugträgerseite WTS2 des zweiten Trägerabschnitts 1b sind beispielhaft auf der oberen Seite des Maschinengestells 1 angeordnet, und die erste Vorderseite VS1 des ersten Trägerabschnitts 1a, die zweite Vorderseite VS2 des zweiten Trägerabschnitts 1b und die dritte Werkzeugträgerseite WTS3 des Mittelabschnitts 1c sind beispielhaft auf der vorderen Seite des Maschinengestells 1 angeordnet, von der der Bearbeiter in den Bearbeitungsraum einsieht. Der Bearbeitungsraum wird dadurch definiert, dass der mittlere Trägerabschnitt 1c zwischen den ersten und zweiten Trägerabschnitten 1a und 1b zum Maschinengestell 1 hin eingerückt ist, derart dass ein nach vorne (in Richtung quer zur zweiten Ebene) geöffneter Bearbeitungsraum geschaffen wird.

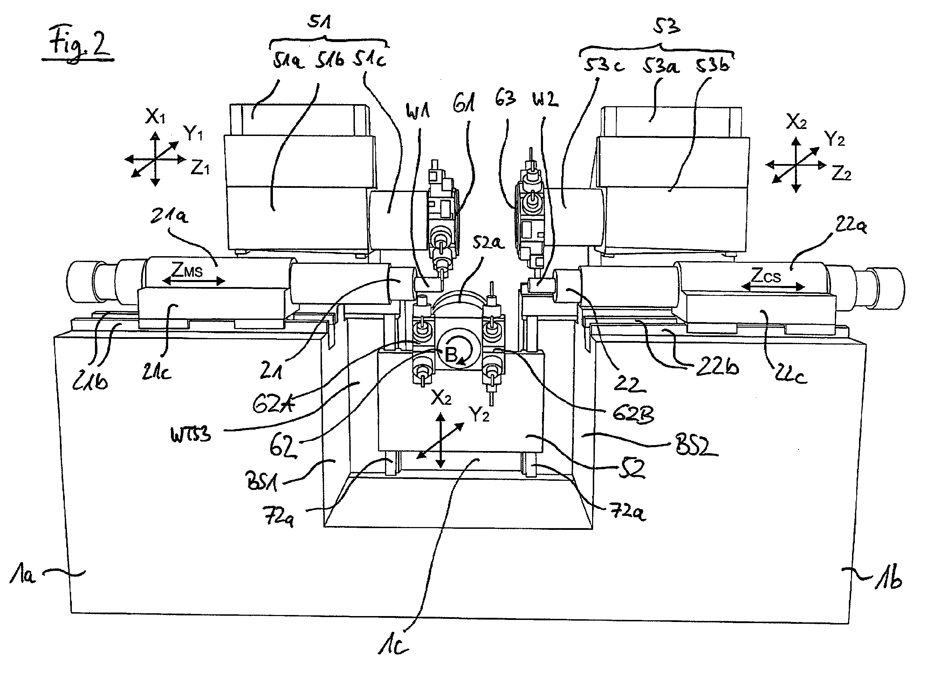

Zwischen den ersten und zweiten Vorderseiten VS1 und VS2 der Trägerabschnitte 1a und 1b und der dritten Werkzeugträgerseite WTS3 des Mittelabschnitts 1c erstrecken sich jeweilige Bearbeitungsraumseiten BS1 und BS2 (siehe z.B. Seite BS1 in **Fig. 1****;** siehe auch **Fig. 2**), die beispielhaft senkrecht zur der ersten Ebene der ersten und zweiten Werkzeugträgerseiten WTS1 und WTS2 der Trägerabschnitte 1a und 1b und quer, insbesondere senkrecht, zu der zweiten Ebene der ersten und zweiten Vorderseiten VS1 und VS2 der Trägerabschnitte 1a und 1b ausgerichtet sind. Die Bearbeitungsraumseiten definieren zusammen mit der dritten Werkzeugträgerseite WTS3 eine Einbuchtung im Maschinengestell 1, die vorteilhaft den Bearbeitungsraum an der Werkzeugmaschine definieren kann bzw. zudem bei vertikaler Ausrichtung wie in **Fig. 1** eine Fallschneise für Späne (siehe auch die Ausführung gemäß **Fig. 2**).

In diesem Ausführungsbeispiel gemäß **Fig. 1** sind die Trägerabschnitte 1a bis 1c miteinander verbunden, können jedoch in anderen Ausführungsbeispielen der Erfindung auch getrennt voneinander bereitgestellt werden.

**Fig. 2** zeigt beispielhaft eine schematische Darstellung einer Vorderansicht einer Werkzeugmaschine gemäß einem Ausführungsbeispiel der vorliegenden Erfindung. Gemäß diesem Ausführungsbeispiel sind Arbeitsspindeln 21 und 22 beispielhaft jeweils an den Werkzeugträgerseiten WTS1 und WTS2 des ersten und zweiten Trägerabschnitts 1a und 1b angeordnet. Die Spindeln 21 und 22 können in weiteren Ausführungsbeispielen jedoch auch auf den Vorderseiten VS1 und VS2 angeordnet sein.

Die Werkzeugmaschine gemäß **Fig. 2** umfasst eine auf der ersten Werkzeugträgerseite WTS1 des ersten Trägerabschnitts 1a angeordnete, an einem Spindelgehäuse 21a gehaltene erste Arbeitsspindel 21 zur Aufnahme eines ersten Werkstücks W1 und eine der ersten Arbeitsspindel 21 zugewandte, auf der zweiten Werkzeugträgerseite WTS2 des zweiten Trägerabschnitts 1b angeordnete zweite Arbeitsspindel 22 zur Aufnahme eines zweiten Werkstücks W2. Die zweite Arbeitsspindel 22 wird an einem Spindelgehäuse 22a gehalten.

Die Spindelachse der zweiten Arbeitsspindel 22 ist in diesem Ausführungsbeispiel koaxial zu der Spindelachse der ersten Arbeitsspindel 21 ausgerichtet, kann jedoch auch parallel, jedoch nicht koaxial ausgerichtet sein, oder parallel ausgerichtet sein und durch Verfahren koaxial ausrichtbar sein.

In diesem Ausführungsbeispiel ist die erste Arbeitsspindel 21 im Spindelgehäuse 21a auf einem auf Führungen 21b geführten Spindelschlitten 21c angeordnet und in Richtung Z (Z_{MS}, MS für "Main Spindle" bzw. Hauptspindel) parallel zu den Spindelachsen verfahrbar und auch die zweite Arbeitsspindel 22, die im Spindelgehäuse 22a auf einem von Führungen 22b geführten Spindelschlitten 22c geführt wird, ist in Richtung Z (Zcs, CS für "Counter Spindle" bzw. Gegenspindel) parallel zu den Spindelachsen verfahrbar. In weiteren Ausführungsbeispielen kann auch nur die erste oder die zweite Arbeitsspindel in Z-Richtung verfahrbar sein.

Die Führungen 21b bzw. 22b verlaufen in diesem Ausführungsbeispiel beispielhaft an der ersten Werkzeugträgerseite WTS1 des ersten Trägerabschnitts 1a bzw. an der zweiten Werkzeugträgerseite WTS2 des zweiten Trägerabschnitts 1b, können jedoch alternativ auch auf den Vorderseiten VS1 bzw. VS2 oder an Vorsprungabschnitten des Maschinengestells 1 angeordnet sein, die an den Vorderseiten VS1 bzw. VS2 angeordnet sein können.

Erfindungsgemäß ist in dem Ausführungsbeispiel gemäß **Fig. 2** ein auf der dritten Werkzeugträgerseite WTS3 des Mittelabschnitts 1c angeordneter erster Werkzeugträgerschlitten 52 vorgesehen, auf dem ein erster Werkzeugträger 62 angeordnet ist. Der erste Werkzeugträgerschlitten 52 ist in vertikaler Richtung X2 in **Fig. 2** und insbesondere senkrecht zu den Spindelachsen der ersten und zweiten Arbeitsspindeln 21 und 22 verfahrbar. Hierfür sind auf der dritten Werkzeugträgerseite WTS3 Führungen 72a angeordnet, die quer zu den Spindelachsen in vertikaler Richtung X2 ausgerichtet sind. Mittels einer Linearachse in einem Gehäuse 52a (zum Beispiel als Teleskopachse ausgebildet), die auf dem ersten Werkzeugträgerschlitten 52 angeordnet ist, ist der erste Werkzeugträger 62 zudem in einer weiteren Richtung Y2 quer zu den Spindelachsen und quer zur Richtung X2 verfahrbar.

Insbesondere ist der erste Werkzeugträger 62 derart ausgebildet, dass er zwei Werkzeugrevolver mit jeweiligen Revolverköpfen 62A und 62B umfasst, die zwischen der ersten Arbeitsspindel 21 und der zweiten Arbeitsspindel 22 angeordnet sind. Jeder der Revolverköpfe 62A und 62B ist an dem Werkzeugträger 62 um eine jeweilige Revolverachse drehbar gelagert. Die Revolverachsen der Revolverköpfe 62A und 62B sind in diesem Ausführungsbeispiel beispielhaft koaxial ausgerichtet.

Weiterhin umfasst das Gehäuse 52a einen Drehachsantrieb einer Drehachse B, mittels der der erste Werkzeugträger 62 rotierbar ist um eine Achse, die quer zu den Spindelachsen und parallel zu der Richtung Y2 bzw. quer zur Richtung X2 ausgerichtet ist. Die Revolverköpfe 62A und 62B sind hierbei derart angeordnet, dass die Revolverachsen quer zur Drehachse B ausgerichtet sind. Weiterhin sind die Revolverköpfe 62A und 62B auf jeweilig relativ zur Drehachse B gegenüberliegenden Seiten am ersten Werkzeugträger 62 angeordnet.

Die Werkzeugmaschine umfasst weiterhin einen auf der ersten Werkzeugträgerseite WTS1 des ersten Trägerabschnitts 1a angeordneten zweiten Werkzeugträgerschlitten 51, auf dem ein zweiter Werkzeugträger 61 angeordnet ist, und einen auf der zweiten Werkzeugträgerseite WTS2 des zweiten Trägerabschnitts 1b angeordneten dritten Werkzeugträgerschlitten 53, auf dem ein dritter Werkzeugträger 63 angeordnet ist.

Der zweite und der dritte Werkzeugträger 61 und 63 sind in diesem Ausführungsbeispiel als Werkzeugrevolver ausgebildet, die jeweils einen um eine parallel zu den Spindelachsen ausgerichtete Revolverachse drehbar gelagerten, werkzeugtragenden Revolverkopf umfassen. Anstelle eines Werkzeugrevolvers ist es jedoch auch möglich, z.B. eine Fräs-/Bohrspindel mit einer Werkzeugaufnahme für den zweiten und/oder dritten Werkzeugträger 61, 63 vorzusehen. Weitere zweckmäßige Ausgestaltungen der Erfindung sind möglich, bei denen auch der zweite und/oder dritte Werkzeugträger wie der erfindungsgemäße erste Werkzeugträger 62 mit den zwei Revolverköpfen 62A und 62B ausgebildet ist.

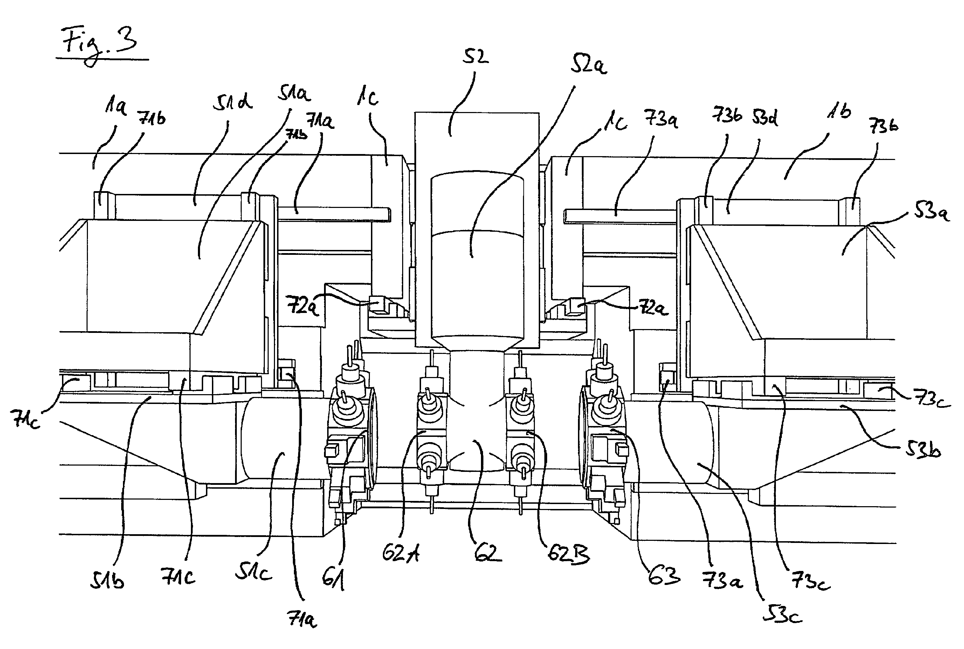

**Fig. 3** zeigt beispielhaft eine schematische Darstellung einer Draufsicht der Werkzeugmaschine gemäß der bevorzugten Ausführungsform der vorliegenden Erfindung aus **Fig. 2****.** Hierbei ist insbesondere der Aufbau der Werkzeugträgerschlitten noch detaillierter 51 und 52 dargestellt.

Der zweite Werkzeugträgerschlitten 51 ist als Doppel-Kreuzschlitten ausgeführt umfassend drei Teilschlitten 51d, 51a und 51b, wobei der Teilschlitten 51d auf dem ersten Trägerabschnitt 1a des Maschinengestells 1 angeordnet ist und auf Führungen 71a geführt wird, die parallel zu den Spindelachsen auf der ersten Werkzeugträgerseite WTS1 des ersten Trägerabschnitts 1a angeordnet sind. Der Teilschlitten 51d ist somit in einer Richtung Z1 (siehe auch **Fig. 2**) verfahrbar. Auf dem Teilschlitten 51d sind Führungen 71b angeordnet, die quer zu den Spindelachsen verlaufen und auf denen der Teilschlitten 51a in Richtung Y1 (siehe auch **Fig. 2**) verfahrbar geführt wird. Auf dem Teilschlitten 51a sind Führungen 71c angeordnet, die quer zu den Spindelachsen und quer zur Richtung Y1 der Führungen 71b verlaufen und auf denen der Teilschlitten 51b in Richtung X1 (siehe auch **Fig. 2**) verfahrbar geführt wird. An dem Teilschlitten 51b ist schließlich ein Gehäuse 51c gehalten, dass sich parallel zu den Spindelachsen in den Bearbeitungsraum hinein erstreckt und an dessen Ende der zweite Werkzeugträger 61 gehalten wird. Aufgrund dieser Bauweise kann der zweite Werkzeugträger 61 in drei orthogonalen Richtungen X1, Y1 und Z1 verfahren werden.

Auch der dritte Werkzeugträgerschlitten 53 ist gemäß diesem Ausführungsbeispiel als Doppel-Kreuzschlitten ausgeführt umfassend drei Teilschlitten 53d, 53a und 53b, wobei der Teilschlitten 53d auf dem zweiten Trägerabschnitt 1b des Maschinengestells 1 angeordnet ist und auf Führungen 73a geführt wird, die parallel zu den Spindelachsen auf der zweiten Werkzeugträgerseite WTS2 des zweiten Trägerabschnitts 1b angeordnet sind. Der Teilschlitten 53d ist somit in einer Richtung Z3 (siehe auch **Fig. 2**) verfahrbar. Auf dem Teilschlitten 53d sind Führungen 73b angeordnet, die quer zu den Spindelachsen verlaufen und auf denen der Teilschlitten 53a in Richtung Y3 (siehe auch **Fig. 2**) verfahrbar geführt wird. Auf dem Teilschlitten 53a sind Führungen 73c angeordnet, die quer zu den Spindelachsen und quer zur Richtung Y3 der Führungen 73b verlaufen und auf denen der Teilschlitten 53b in Richtung X3 (siehe auch **Fig. 2**) verfahrbar geführt wird. An dem Teilschlitten 53b ist schließlich ein Gehäuse 53c gehalten, dass sich parallel zu den Spindelachsen in den Bearbeitungsraum hinein erstreckt und an dessen Ende der dritte Werkzeugträger 63 gehalten wird. Aufgrund dieser Bauweise kann der dritte Werkzeugträger 63 in drei orthogonalen Richtungen X3, Y3 und Z3 verfahren werden.

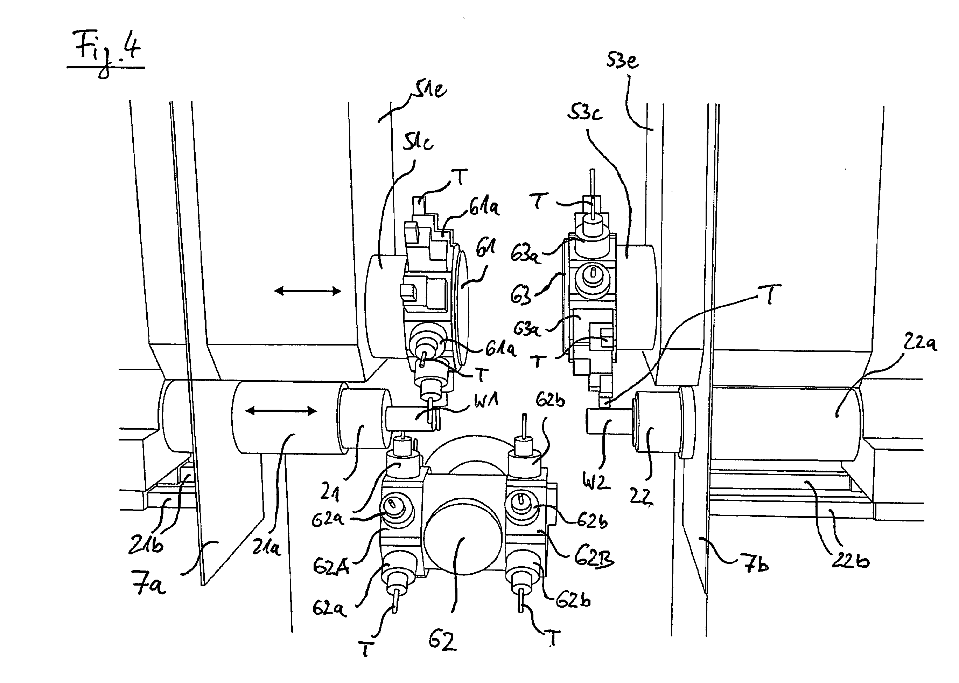

**Fig. 4** zeigt beispielhaft eine schematische Darstellung einer Detailansicht des Bearbeitungsraums der Werkzeugmaschine gemäß der bevorzugten Ausführungsform der vorliegenden Erfindung aus **Figs. 2** und **3****.**

Wie bereits vorstehend beschrieben sind der zweite und dritte Werkzeugträger in diesem Ausführungsbeispiel als Werkzeugrevolver mit jeweiligen Revolverköpfen 61 und 63 ausgebildet. Die Revolverköpfe 61 und 63 sind hierbei derart ausgerichtet, dass die Revolverachsen parallel zueinander und parallel zu den Spindelachsen ausgerichtet sind. Am Revolverkopf 61 des zweiten Werkzeugträgers sind umfänglich um die Revolverachse eine Mehrzahl von Werkzeughaltern 61a angeordnet, die jeweils dazu eingerichtet sind, Werkzeuge T zur Bearbeitung eines Werkstücks zu halten.

Durch Rotation des Revolverkopfs 61 um die Revolverachse können die jeweiligen Werkzeughalter 61a mit der ersten Arbeitsspindel 21 ausgerichtet werden, um ein in dieser gehaltenes Werkstück W1 zu bearbeiten. Ein Antrieb des Werkzeugrevolvers kann in dem Gehäuse 51c angeordnet sein. Analog sind am Revolverkopf 63 des dritten Werkzeugträgers umfänglich um die Revolverachse eine Mehrzahl von Werkzeughaltern 63a angeordnet, die jeweils dazu eingerichtet sind, Werkzeuge T zur Bearbeitung eines Werkstücks zu halten. Durch Rotation des Revolverkopfs 63 um die Revolverachse können die jeweiligen Werkzeughalter 63a mit der zweiten Arbeitsspindel 22 ausgerichtet werden, um ein in dieser gehaltenes Werkstück W2 zu bearbeiten. Ein Antrieb des Werkzeugrevolvers kann in dem Gehäuse 53c angeordnet sein.

Am Revolverkopf 62A des ersten Werkzeugträgers 62 sind umfänglich um die Revolverachse eine Mehrzahl von Werkzeughaltern 62a angeordnet, die jeweils dazu eingerichtet sind, Werkzeuge T zur Bearbeitung eines Werkstücks zu halten. Durch Rotation des Revolverkopfs 62A um die Revolverachse können die jeweiligen Werkzeughalter 62a mit der ersten Arbeitsspindel 21 (oder auch mit der zweiten Arbeitsspindel 22) ausgerichtet werden, um ein in diesen gehaltenes Werkstück W1 oder W2 zu bearbeiten.

In **Fig. 4** ist beispielhaft ein Werkzeug des Werkzeugrevolvers 62A mit der ersten Arbeitsspindel 21 ausgerichtet, so dass das in dieser gehaltene Werkstück W1 sowohl durch ein Werkzeug des Werkzeugrevolvers 62A als auch zeitgleich durch ein Werkzeug des Werkzeugrevolvers 61 bearbeitet werden kann. Zeitgleich kann ein an der zweiten Arbeitsspindel 22 gehaltenes Werkstück W2 mittels eines Werkzeugs des Werkzeugrevolvers 63 bearbeitet werden.

Am Revolverkopf 62B des ersten Werkzeugträgers 62 sind umfänglich um die Revolverachse eine Mehrzahl von Werkzeughaltern 62b angeordnet, die jeweils dazu eingerichtet sind, Werkzeuge T zur Bearbeitung eines Werkstücks zu halten. Durch Rotation des Revolverkopfs 62B um die Revolverachse können die jeweiligen Werkzeughalter 62b mit der zweiten Arbeitsspindel 22 (oder auch mit der ersten Arbeitsspindel 21) ausgerichtet werden, um ein in diesen gehaltenes Werkstück W2 oder W1 zu bearbeiten.

Beispielsweise kann die zweite Arbeitsspindel 22 in **Fig. 4** zusammen mit dem Werkzeugträger 63 weiter in den Bearbeitungsraum verfahren werden, so dass mittels des Werkzeugträgers 62 zeitgleich das an der ersten Arbeitsspindel 21 gehaltene Werkstück W1 mit einem Werkzeug des Werkzeugrevolvers 62A als auch das an der zweiten Arbeitsspindel 22 gehaltene Werkstück W2 mit einem Werkzeug des Werkzeugrevolvers 62B bearbeitet werden können. Somit ist es vorteilhaft möglich sogar zwei Werkstücke W1 und W2 bei einer Bauweise mit nur drei kompakt angeordneten Werkzeugträgern 61, 62 und 63 auf nur drei kompakten Schlittensystemen 51, 52 und 53 gleichzeitig in unterschiedlichsten Konstellationen mit jeweils zwei Werkzeugen zu bearbeiten.

Hierfür ist dieses Ausführungsbeispiel auch gerade deshalb derart zweckmäßig und vorteilhaft, da pro Spindel ein jeweiliger doppelter Verfahrbarkeitsfreiheitsgrad parallel zu den Spindelachsen bereitgestellt wird. Speziell sind sowohl der zweite Werkzeugträger 61 und die erste Arbeitsspindel 21 als auch der dritte Werkzeugträger 63 und die zweite Arbeitsspindel 22 jeweils unabhängig voneinander in Richtung parallel zu den Spindelachsen verfahrbar (siehe beispielhaft die beiden Pfeile in **Fig. 4** für Spindel 22 und Werkzeugträger 61, bzw. Richtungen Z_{MS} und Z1 bzw. Zcs und Z3 in **Fig. 2**).

Somit kann die relative Position in Richtung der Spindelachsen zwischen Werkstück W1 an der ersten Arbeitsspindel 21 und einem Werkzeug am Revolver 62A des ersten Werkzeugträgers 62 mittels der Z_{MS}-Vertahrbarkeit der Spindel 21 gesteuert werden, wobei die relative Position in Richtung der Spindelachsen zwischen Werkstück W1 an der ersten Arbeitsspindel 21 und einem Werkzeug am zweiten Werkzeugträger 61 mittels der Z1-Vertahrbarkeit des zweiten Werkzeugträgers 61 gesteuert werden kann.

Analog kann die relative Position in Richtung der Spindelachsen zwischen Werkstück W2 an der zweiten Arbeitsspindel 22 und einem Werkzeug am Revolver 62B des ersten Werkzeugträgers 62 mittels der Zcs-Verfahrbarkeit der Spindel 22 gesteuert werden, wobei die relative Position in Richtung der Spindelachsen zwischen Werkstück W2 an der zweiten Arbeitsspindel 22 und einem Werkzeug am dritten Werkzeugträger 63 mittels der Z3-Verfahrbarkeit des dritten Werkzeugträgers 63 gesteuert werden kann.

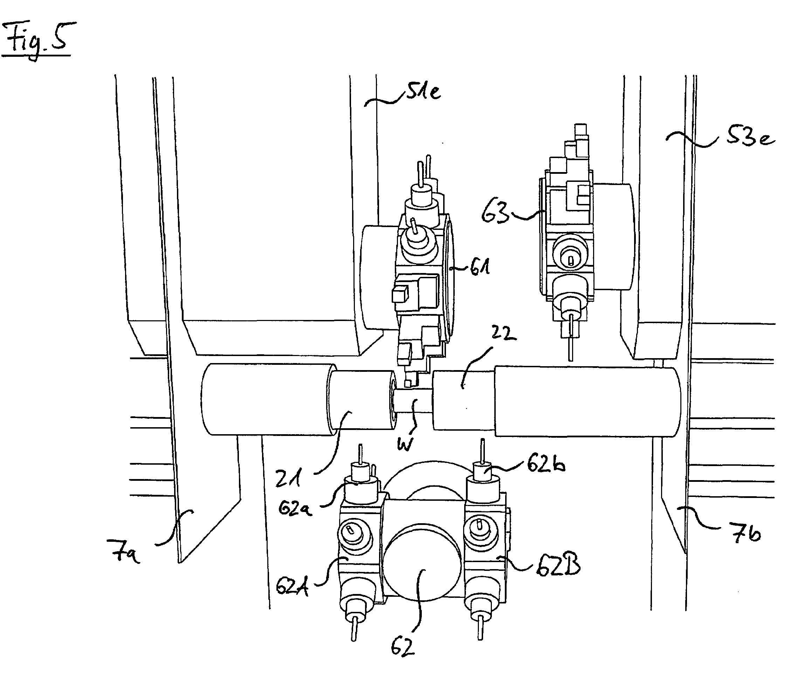

**Fig. 5** zeigt beispielhaft eine weitere schematische Darstellung einer Detailansicht des Bearbeitungsraums der Werkzeugmaschine gemäß der bevorzugten Ausführungsform der vorliegenden Erfindung aus **Fig. 2****.** In dieser Darstellung ist ein Werkstück W gleichzeitig an beiden Arbeitsspindeln 21 und 22 aufgenommen und ein Werkzeug des zweiten Werkzeugträgers 61 kann dazu verwendet werden, das Werkstück W in Werkstücke W1 bzw. W2 zu zerteilen, die dann jeweils an der ersten bzw. zweiten Arbeitsspindel 21 bzw. 22 aufgenommen sind und unabhängig voneinander bearbeitet werden können, z.B. gemäß der Konstellation aus **Fig.4****.** In **Fig. 5** sind beispielhaft optionale zusätzliche Abdeckungen 51e und 53e gezeigt, die dazu verwendet werden können, die Werkzeugträgerschlitten 51 und 53 abzudecken und vor Spänen zu schützen.

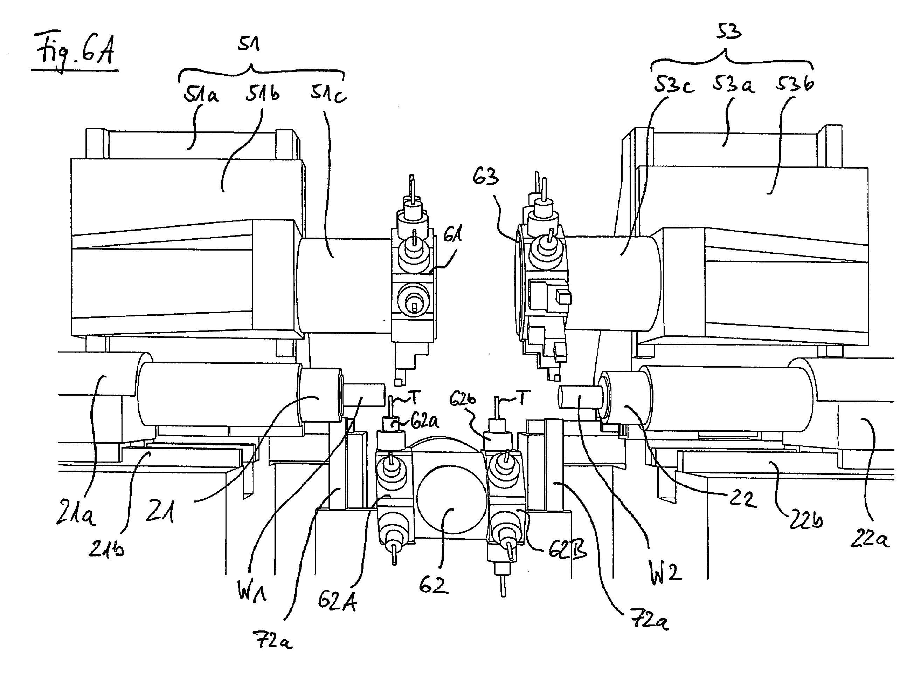

**Figs. 6A** bis **6D** zeigen beispielhaft weitere schematische Darstellungen einer Detailansicht des Bearbeitungsraums der Werkzeugmaschine gemäß der bevorzugten Ausführungsform der vorliegenden Erfindung aus **Fig. 2** zur Visualisierung der vielseitigen Orientierbarkeit des ersten Werkzeugträgers 62.

Hierbei zeigt sich die besonders zweckmäßige Ausgestaltung des ersten Werkzeugträgers 62 in diesem Ausführungsbeispiel der vorliegenden Erfindung. Die Konstellation gemäß **Fig. 6A** entspricht hierbei im Wesentlichen der Konstellation gemäß **Fig. 4****.** Folglich können, wie vorstehend bereits beschrieben, beide Werkstücke W1 und W2 an den jeweiligen Arbeitsspindeln 21 und 22 jeweils mit zwei Werkzeugen des Werkzeugträgers 62, je durch ein Werkzeug des Revolvers 62A und ein Werkzeug des Revolvers 62B, gleichzeitig bearbeitet werden.

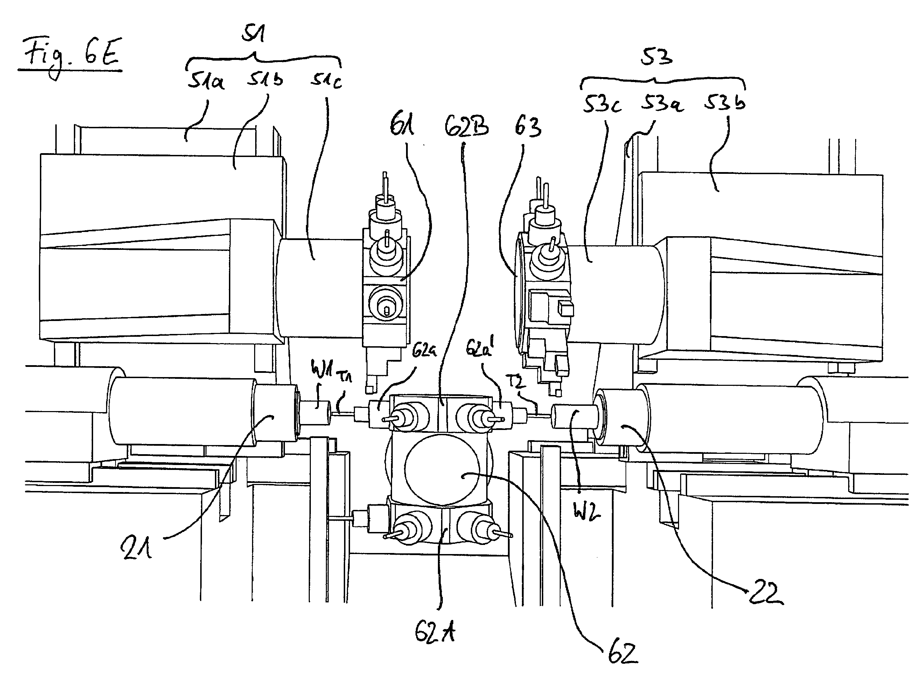

Aufgrund der vorteilhaften Ausgestaltung des Werkzeugträgers 62 mit zwei koaxial angeordneten Revolverköpfen 62A und 62B auf gegenüberliegenden Seiten der Drehachse B des Werkzeugträgers 62 kann die Revolverachse der Revolverköpfen 62A und 62B relativ zu der Ausrichtung der Spindelachsen rotiert werden, so dass von einer radialen Bearbeitung des Werkstücks W1 gemäß **Fig. 6A** mittels eines Werkzeugs T des Revolverkopfs 62A beinahe kontinuierlich in eine axiale Bearbeitung des Werkstücks W1 gemäß **Fig. 6E** mittels eines Werkzeugs T1 des Revolverkopfs 62B übergegangen werden kann.

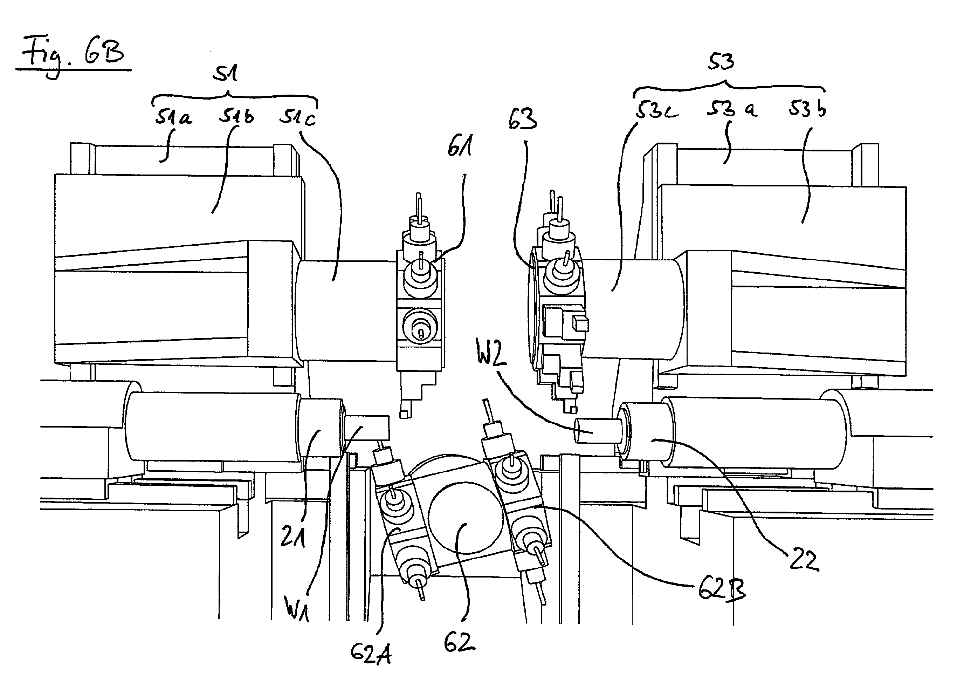

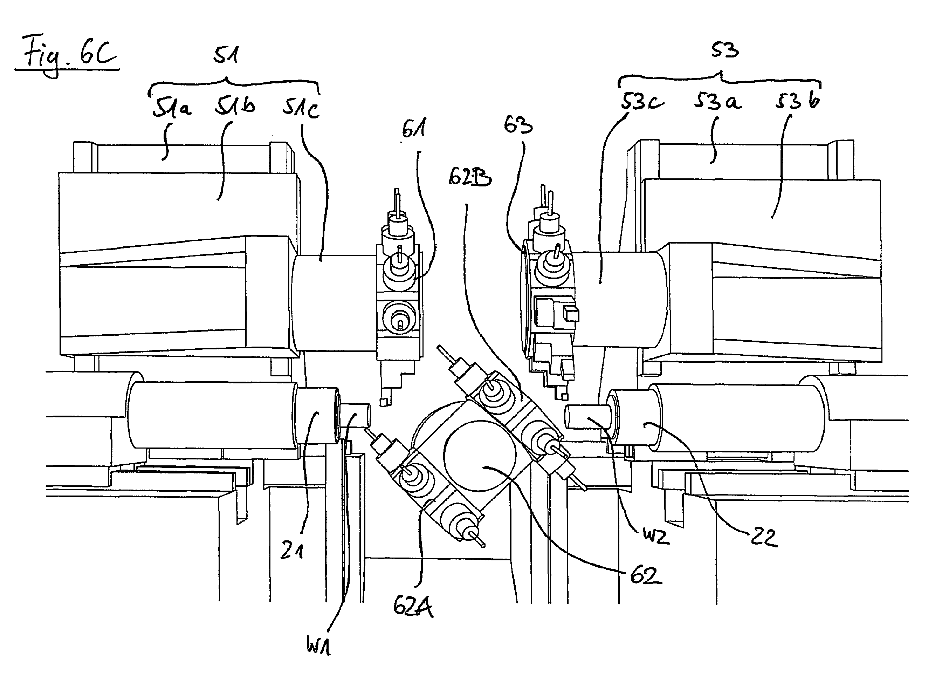

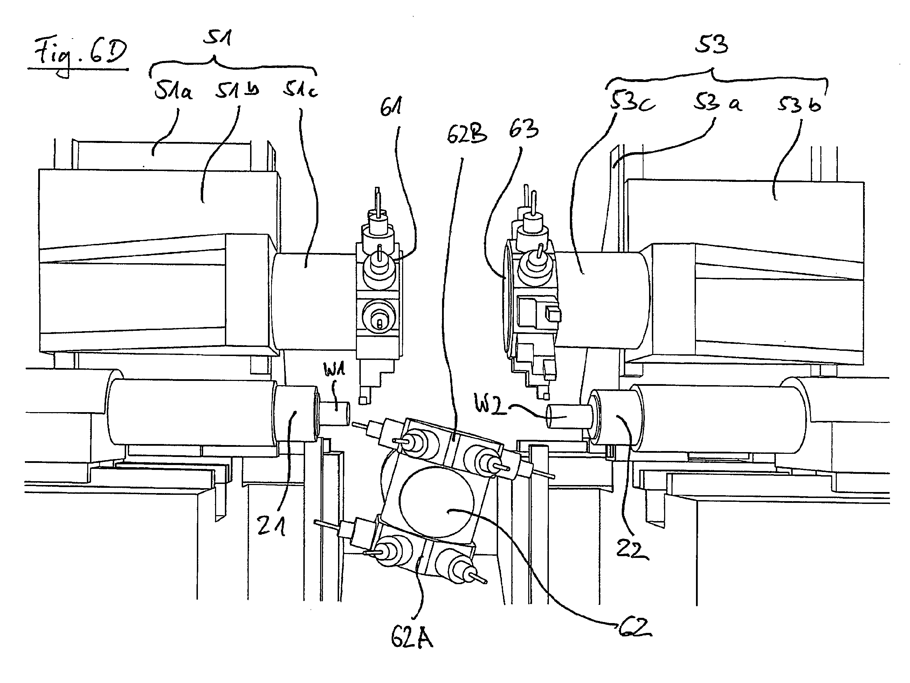

Hierbei ist die Orientierung der Revolverachsen der Revolver 62A und 62B zu den Spindelachsen beispielhaft in **Fig. 6A** 0°, in **Fig. 6B** 15°, in **Fig. 6C** 45°, in **Fig. 6D** 75° und schließlich in **Fig. 6E** 90°. Zwischen der Orientierung gemäß **Fig. 6C** und **Fig. 6D** wurde hierbei beispielhaft von einer Bearbeitung mit einem Werkzeug des Werkzeugrevolvers 62A auf eine Bearbeitung mit einem Werkzeug des Werkzeugrevolver 62B durch Verfahren des Werkzeugträgers in Richtung X2 nach unten umgeschaltet, um den Werkzeugträgern 61 und 63 mehr Raum zur Bearbeitung zu geben. Diese müssten sonst in Richtung X1 bzw. X3 nach oben verfahren werden und könnten nicht mehr an der Bearbeitung der Werkstücke W1 und W2 teilnehmen.

Weiterhin ist in **Fig. 6E** dargestellt, dass die Ausgestaltung des ersten Werkzeugträgers 62 gemäß der die Revolverachse des Werkstückrevolvers 62B (bzw. 62A) quer zu den Spindelachsen ausgerichtet werden kann, den weiteren Vorteil bietet, dass die an den beiden Arbeitsspindeln 21 und 22 gehaltenen Werkstücke W1 und W2 weiterhin auch in axialer Richtung gleichzeitig bearbeitet werden können durch Werkzeuge T1 und T2 des Revolvers 62B des ersten Werkzeugträgers 62.

Insbesondere weist der erste Werkzeugrevolverkopf 62A sowie der zweite Werkzeugrevolverkopf 62B jeweils eine Mehrzahl von Aufnahmen zum Aufnehmen werkzeughaltenden Werkzeughaltern 62a bzw. 62b auf, und beide Werkzeugrevolverköpfe 62A und 62B sind dazu eingerichtet, eine Aufnahme durch Rotation des jeweiligen Werkzeugrevolverkopfes 62A bzw. 62B um die Revolverachse auf ein an einer der Arbeitsspindeln aufgenommenes Werkstück auszurichten. Hierbei sind die Aufnahmen jeweils paarweise relativ zur ersten Revolverachse auf gegenüberliegenden Seiten auf dem jeweiligen Werkzeugrevolverkopf 62A bzw. 62B angeordnet, derart, dass jeweils eine Aufnahme mit der zweiten Arbeitsspindel 22 ausrichtbar ist, indem eine andere, gegenüberliegende Aufnahme mit der ersten Arbeitsspindel 21 ausgerichtet wird, wenn die Revolverachse quer, insbesondere senkrecht, zu den Spindelachsen ausgerichtet ist, wie es z.B. in **Fig. 6E** beispielhaft für den zweiten Revolverkopf 62B dargestellt ist.

Zudem ist der Werkzeugträger 62 dazu eingerichtet, eine Aufnahme des ersten Werkzeugrevolverkopfes 62A auf das an der ersten Arbeitsspindel 21 aufgenommenes Werkstück W1 auszurichten, indem eine Aufnahme des zweiten Werkzeugrevolverkopfes 62B auf das an der zweiten Arbeitsspindel 22 aufgenommenes Werkstück W2 ausgerichtet wird, wenn die Revolverachse parallel zu den Spindelachsen ausgerichtet ist, wie es beispielhaft in **Fig. 6A** dargestellt ist.

Gemäß dieses besonders zweckmäßigen Ausführungsbeispiels kann also gemäß **Fig. 6A** eine erste Konstellation bereitgestellt werden, bei der die Revolverachsen der Werkzeugrevolver 62A und 62B parallel zu den Spindelachsen der Arbeitsspindeln 21 und 22 ausgerichtet sind und das an der ersten Arbeitsspindel 21 aufgenommene Werkstück W1 mit einem Werkzeug des Werkzeugrevolvers 62A radial bearbeitet werden kann, während gleichzeitig das an der zweiten Arbeitsspindel 22 aufgenommene Werkstück W2 mit einem Werkzeug des Werkzeugrevolvers 62B radial bearbeitet werden kann, und weiterhin kann gemäß **Fig. 6E** eine zweite Konstellation bereitgestellt werden, bei der die Revolverachsen der Werkzeugrevolver 62A und 62B quer zu den Spindelachsen der Arbeitsspindeln 21 und 22 ausgerichtet sind und das an der ersten Arbeitsspindel 21 aufgenommene Werkstück W1 mit einem Werkzeug T1 des Werkzeugrevolvers 62B bearbeitet werden kann, während gleichzeitig das an der zweiten Arbeitsspindel 22 aufgenommene Werkstück W2 mit einem Werkzeug T2 des Werkzeugrevolvers 62B, welches am Werkzeugrevolver 62B auf einer dem Werkzeug T1 gegenüberliegenden Position angeordnet ist, bearbeitet werden kann.

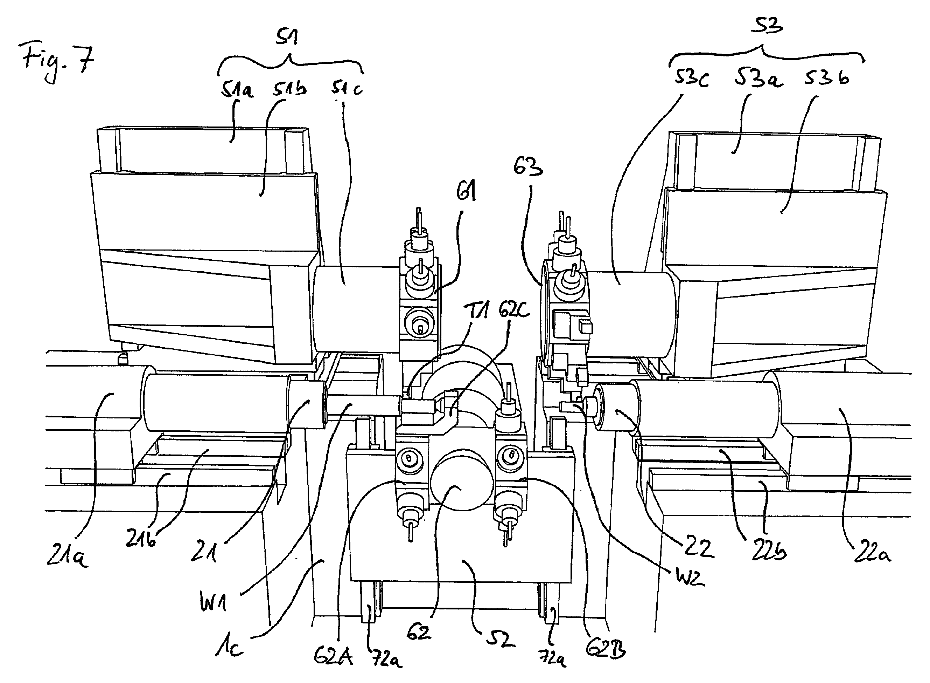

**Fig.7** zeigt beispielhaft eine weitere schematische Darstellung einer Detailansicht des Bearbeitungsraums der Werkzeugmaschine gemäß der bevorzugten Ausführungsform der vorliegenden Erfindung aus **Fig. 2** im Zusammenhang mit einer Reitstock-Anwendung.

Hierbei ist an einer Aufnahme des Werkzeugrevolvers 62A ein Reitstock 62C mit einer Zentrierspitze angeordnet, mittels der ein längliches Werkstück W1, das an der ersten Arbeitsspindel 21 aufgenommen ist, zentriert und gehalten wird, um nicht unter dem Druck, der durch das bearbeitende Werkzeug T1 des dritten Werkzeugträgers 61 aufgebracht wird, gebogen zu werden.

Gleichzeitig kann auch in dieser Konstellation vorteilhaft ein weiteres Werkstück W2 an der zweiten Arbeitsspindel 22 mittels eines Werkzeugs des dritten Werkzeugträgers 63 bearbeitet werden. Durch weiteres Einfahren der Spindel 22 und des Werkzeugträgers 63 in den Bearbeitungsraum kann das Werkstück W2 weiterhin gleichzeitig auch noch zusätzlich durch ein Werkzeug des Werkzeugrevolvers 62B bearbeitet werden.

Zusammenfassend ermöglicht es die vorliegende Erfindung einen Werkzeugträger bzw. eine Werkzeugmaschine der gattungsgemäßen Art derart zu verbessern, dass eine effiziente Bearbeitung der Werkstücke mit möglichst vielen, möglichst gleichzeitig einsetzbaren Werkzeugen bei möglichst hoher Flexibilität bezüglich der Steuerung der relativen Bewegungen zwischen den Werkzeugen und den in den Arbeitsspindeln aufgenommenen Werkzeugen bei gleichzeitiger kompakter Bauweise der Werkzeugmaschine ermöglicht wird.

## Patentansprüche

1. Werkzeugmaschine, umfassend:
- ein Maschinengestell (1);
- eine an dem Maschinengestell (1) angeordnete erste Arbeitsspindel (21) zur Aufnahme eines ersten Werkstücks (W1); und
- eine der ersten Arbeitsspindel (21) zugewandte, an dem Maschinengestell (1) angeordnete zweite Arbeitsspindel (22) zur Aufnahme eines zweiten Werkstücks (W2), wobei die Spindelachse der zweiten Arbeitsspindel (22) koaxial zu der Spindelachse der ersten Arbeitsspindel (21) ausgerichtet ist;
einen zwischen den koaxial zueinander ausgerichteten Arbeitsspindeln (21, 22) angeordneten ersten Werkzeugträger (62) mit zwei werkzeugtragenden Werkzeugrevolverköpfen (62A, 62B), die um jeweilige parallel oder koaxial zueinander ausgerichtete Revolverachsen drehbar gelagert sind, und **gekennzeichnet durch** einer numerisch steuerbaren Drehachse (B) zum Rotieren des ersten Werkzeugträgers (62);
wobei die zwei Werkzeugrevolverköpfe (62A, 62B) relativ zur Rotationsachse der Drehachse (B) auf gegenüberliegenden Seiten des ersten Werkzeugträgers (62) angeordnet sind; und wobei die Drehachse (B) quer oder senkrecht zu den Spindelachsen der ersten und zweiten Arbeitsspindeln (21, 22) ausgerichtet ist und die Revolverachsen der Werkzeugrevolverköpfe (62A, 62B) quer oder senkrecht zur Rotationsachse der Drehachse (B) ausgerichtet sind.

2. Werkzeugmaschine nach Anspruch 1, **dadurch gekennzeichnet, dass**
die Revolverachsen der zwei Werkzeugrevolverköpfe (62A, 62B) des ersten Werkzeugträgers (62) durch Drehen des ersten Werkzeugträgers (62) um die Drehachse (B) quer zu den Spindelachsen der ersten und zweiten Arbeitsspindeln (21, 22) ausrichtbar sind,
die Revolverachsen der zwei Werkzeugrevolverköpfe (62A, 62B) ersten Werkzeugträgers (62) durch Drehen des ersten Werkzeugträgers (62) um die Drehachse (B) parallel mit den Spindelachsen der ersten und zweiten Arbeitsspindeln (21, 22) ausrichtbar sind, und/oder
die Revolverachsen der zwei Werkzeugrevolverköpfe (62A, 62B) ersten Werkzeugträgers (62) durch Drehen des ersten Werkzeugträgers (62) um die Drehachse mit beliebigen Winkeln zu den Spindelachsen der ersten und zweiten Arbeitsspindeln (21, 22) ausrichtbar sind.

3. Werkzeugmaschine nach Anspruch 1 oder 2, weiterhin **gekennzeichnet, durch**
eine numerisch steuerbare Linearachse zum Verfahren der zwei Revolverköpfe (62A, 62B) in Richtung (Y2) parallel zur Rotationsachse der Drehachse (B) des ersten Werkzeugträgers (62).

4. Werkzeugmaschine nach einem der vorhergehenden Ansprüche, **dadurch gekennzeichnet, dass**
der erste Werkzeugträger (62) dazu eingerichtet ist, ein an dem ersten Werkzeugträger (62) gehaltenes Werkzeug mit einem an der ersten Arbeitsspindel (21) aufgenommenen ersten Werkstück (W1) zur Bearbeitung des Werkstücks auszurichten.

5. Werkzeugmaschine nach einem der vorhergehenden Ansprüche, **gekennzeichnet durch**
einen an dem Maschinengestell (1) angeordneten ersten Werkzeugträgerschlitten (52), auf dem der erste Werkzeugträger (62) angeordnet ist,
wobei der erste Werkzeugträgerschlitten (52) in einer ersten Richtung (X2) quer oder senkrecht zu der Spindelachse der ersten Arbeitsspindel verfahrbar ist.

6. Werkzeugmaschine nach einem der vorhergehenden Ansprüche, **dadurch gekennzeichnet, dass**
ein erster Werkzeugrevolverkopf (62A) der zwei Werkzeugrevolverköpfe eine Mehrzahl von Aufnahmen zum Aufnehmen von Werkzeugen (T) oder werkzeughaltenden Werkzeughaltern (62a) aufweist, wobei der erste Werkzeugträger (62) dazu eingerichtet ist, eine Aufnahme des ersten Werkzeugrevolverkopfes (62A) durch Rotation des ersten Werkzeugrevolverkopfes (62A) um die Revolverachse des ersten Werkzeugrevolverkopfes (62A) auf ein an einer der Arbeitsspindeln aufgenommenes Werkstück auszurichten,
wobei die Aufnahmen jeweils paarweise relativ zur Revolverachse des ersten Werkzeugrevolverkopfes (62A) auf gegenüberliegenden Seiten auf dem ersten Werkzeugrevolverkopf (62A) angeordnet sind, derart, dass jeweils eine Aufnahme mit der zweiten Arbeitsspindel (22) ausrichtbar ist, indem eine andere, gegenüberliegende Aufnahme mit der ersten Arbeitsspindel (21) ausgerichtet wird, wenn die Revolverachse des ersten Werkzeugrevolverkopfes (62A) quer oder senkrecht zu den Spindelachsen ausgerichtet ist.

7. Werkzeugmaschine nach einem der vorhergehenden Ansprüche, **dadurch gekennzeichnet, dass**
ein zweiter Werkzeugrevolverkopf (62B) der zwei Werkzeugrevolverköpfe eine Mehrzahl von Aufnahmen zum Aufnehmen von Werkzeugen (T) oder werkzeughaltenden Werkzeughaltern (62b) aufweist, wobei der erste Werkzeugträger (62) dazu eingerichtet ist, eine Aufnahme des zweiten Werkzeugrevolverkopfes (62B) durch Rotation des zweiten Werkzeugrevolverkopfes (62B) um die Revolverachse des zweiten Werkzeugrevolverkopfes (62B) auf ein an einer der Arbeitsspindeln aufgenommenes Werkstück auszurichten,
wobei die Aufnahmen jeweils paarweise relativ zur Revolverachse des zweiten Werkzeugrevolverkopfes (62B) auf gegenüberliegenden Seiten auf dem zweiten Werkzeugrevolverkopf (62B) angeordnet sind, derart, dass jeweils eine Aufnahme mit der ersten Arbeitsspindel (21) ausrichtbar ist, indem eine andere, gegenüberliegende Aufnahme mit der zweiten Arbeitsspindel (22) ausgerichtet wird, wenn die Revolverachse des zweiten Werkzeugrevolverkopfes (62B) quer oder senkrecht zu den Spindelachsen ausgerichtet ist.

8. Werkzeugmaschine nach Anspruch 6 und Anspruch 7, **dadurch gekennzeichnet, dass**
eine Aufnahme des ersten Werkzeugrevolverkopfes (62A) auf ein an der ersten Arbeitsspindel (21) aufgenommenes Werkstück (W1) ausrichtbar ist, indem eine Aufnahme des zweiten Werkzeugrevolverkopfes (62B) auf ein an der zweiten Arbeitsspindel (22) aufgenommenes Werkstück (W2) ausgerichtet wird, wenn die Revolverachsen der zwei Werkzeugrevolverköpfe (62A, 62B) parallel zu den Spindelachsen ausgerichtet sind.

9. Werkzeugmaschine nach einem der vorhergehenden Ansprüche, **dadurch gekennzeichnet, dass**
das Maschinengestell (1) einen eine erste Werkzeugträgerseite (WTS1) aufweisenden ersten Trägerabschnitt (1a), einen eine zweite Werkzeugträgerseite (WTS2) aufweisenden zweiten Trägerabschnitt (1b) und einen zwischen dem ersten und dem zweiten Trägerabschnitt angeordneten Mittelabschnitt (1c), der eine dritte Werkzeugträgerseite (WTS3) aufweist, umfasst,
wobei die erste Werkzeugträgerseite (WTS1) des ersten Trägerabschnitts (1a) und die zweite Werkzeugträgerseite (WTS2) des zweiten Trägerabschnitts (1b) auf einer gleichen ersten Seite des Maschinengestells (1) angeordnet sind, und die dritte Werkzeugträgerseite (WTS3) des Mittelabschnitts (1c) auf einer im Wesentlichen senkrecht oder schräg zur ersten Seite des Maschinengestells (1) angeordneten zweiten Seite des Maschinengestells (1) angeordnet ist.

10. Werkzeugmaschine nach Anspruch 9, **dadurch gekennzeichnet, dass**
die erste Arbeitsspindel (21) auf dem ersten Trägerabschnitt (1a) angeordnet ist und die zweite Arbeitsspindel (22) auf dem zweiten Trägerabschnitt (1b) angeordnet ist.

11. Werkzeugmaschine nach Anspruch 9 oder 10, **dadurch gekennzeichnet, dass**
ein quer zu den Spindelachsen verfahrbarer erster Werkzeugträgerschlitten (52) auf der dritten Werkzeugträgerseite (WTS3) des Mittelabschnitts (1c) angeordnet ist, wobei der erste Werkzeugträger (62) auf dem ersten Werkzeugträgerschlitten (52) angeordnet ist,
wobei der Mittelabschnitt (1c) zwischen einer ersten und einer zweiten Führung eine Ausnehmung ausweist, in die sich ein Gehäuse (52a) der Drehachse des ersten Werkzeugträgers (62) hinein erstreckt.

12. Werkzeugmaschine nach einem der Ansprüche 9 bis 11, **gekennzeichnet durch**
- einen auf der ersten Werkzeugträgerseite (WTS1) des ersten Trägerabschnitts (1a) angeordneten zweiten Werkzeugträgerschlitten (51), auf dem ein zweiter Werkzeugträger (61) angeordnet ist, und/oder
- einen auf der zweiten Werkzeugträgerseite (WTS2) des zweiten Trägerabschnitts (1b) angeordneten dritten Werkzeugträgerschlitten (53), auf dem ein dritter Werkzeugträger (63) angeordnet ist,
wobei der zweite und/oder dritte Werkzeugträgerschlitten (51; 53) parallel oder quer oder senkrecht zu den Spindelachsen verfahrbar ist, und wobei der zweite und/oder dritte Werkzeugträger (61; 63) in einer ersten Richtung (X1; X2) quer zu den Spindelachsen verfahrbar ist, in einer zweiten Richtung (Y1; Y2) quer zu der ersten Richtung (X1, X2) und quer zu den Spindelachsen verfahrbar ist und/oder in einer dritten Richtung (Z1; Z2) parallel zu den Spindelachsen verfahrbar ist.

13. Werkzeugmaschine nach Anspruch 12, **dadurch gekennzeichnet, dass**
der zweite und/oder dritte Werkzeugträger (61; 63) als Werkzeugrevolver ausgebildet ist, der einen um eine parallel zu den Spindelachsen ausgerichtete Revolverachse drehbar gelagerten, werkzeugtragenden Revolverkopf umfasst.

14. Werkzeugmaschine nach einem der Ansprüche 9 bis 13, **dadurch gekennzeichnet, dass**
die erste Werkzeugträgerseite (WTS1) des ersten Trägerabschnitts (1a) und die zweite Werkzeugträgerseite (WTS2) des zweiten Trägerabschnitts (1b) im Wesentlichen eine erste Ebene aufspannen und die dritte Werkzeugträgerseite (WTS3) des Mittelabschnitts (1c) im Wesentlichen eine zur ersten Ebene senkrecht oder schräg ausgerichtete zweite Ebene aufspannt,
wobei die zweite Ebene relativ zur zweiten Seite der ersten und zweiten Trägerabschnitte (1a, 1b) des Maschinengestells (1) zum Maschinengestell (1) hin eingerückt ist.

## Claims

1. A machine tool including:
- a machine rack (1);
- a first working spindle (21) disposed at the machine rack (1) for receiving a first workpiece (W1); and
- a second working spindle (22) facing the first working spindle (21), disposed at the machine rack (1) for receiving a second workpiece (W2), wherein the spindle axis of the second working spindle (22) is oriented coaxially to the spindle axis of the first working spindle (21);
a first tool carrier (62) disposed between the working spindles (21, 22) oriented coaxially to each other having two tool-carrying tool turret heads (62A, 62B), which are rotatably supported around respective turret axes oriented parallel or coaxially to each other, and
**characterized by**
a numerically controllable rotary axis (B) for rotating the first tool carrier (62);
wherein the two tool turret heads (62A, 62B) are disposed on opposing sides of the first tool carrier (62) relative to the axis of revolution of the rotary axis (B); and wherein the rotary axis (B) is oriented transversely or perpendicularly to the spindle axes of the first and second working spindles (21, 22) and the turret axes of the tool turret heads (62A, 62B) are oriented transversely or perpendicularly to the axis of revolution of the rotary axis (B).

2. The machine tool according to claim 1, **characterized in that**
the turret axes of the two tool turret heads (62A, 62B) of the first tool carrier (62) can be oriented transversely to the spindle axes of the first and second working spindles (21, 22) by rotating the first tool carrier (62) around the rotary axis (B),
the turret axes of the two tool turret heads (62A, 62B) of the first tool carrier (62) can be oriented parallel to the spindle axes of the first and second working spindles (21, 22) by rotating the first tool carrier (62) around the rotary axis (B), and/or
the turret axes of the two tool turret heads (62A, 62B) of the first tool carrier (62) can be oriented at any angles to the spindle axes of the first and second working spindles (21, 22) by rotating the first tool carrier (62) around the rotary axis.

3. The machine tool according to claim 1 or 2, further **characterized by**
a numerically controllable linear axis for moving the two turret heads (62A, 62B) in the direction (Y2) parallel to the axis of revolution of the rotary axis (B) of the first tool carrier (62).

4. The machine tool according to any one of the preceding claims, **characterized in that**
the first tool carrier (62) is arranged to orient a tool retained at the first tool carrier (62) to a first workpiece (W1) received at the first working spindle (21) for processing the workpiece.

5. The machine tool according to any one of the preceding claims, **characterized by**
a first tool carrier slide (52) disposed at the machine rack (1), on which the first tool carrier (62) is disposed,
wherein the first tool carrier slide (52) is movable in a first direction (X2) transversely or perpendicularly to the spindle axis of the first working spindle.

6. The machine tool according to any one of the preceding claims, **characterized in that**
a first tool turret head (62A) of the two tool turret heads has a plurality of receptacles for receiving tools (T) or tool-retaining tool retainers (62a), wherein the first tool carrier (62) is arranged to orient a receptacle of the first tool turret head (62A) to a workpiece received at one of the working spindles by rotating the first tool turret head (62A) around the turret axis of the first tool turret head (62A),
wherein the receptacles are respectively disposed in pairs on opposing sides on the first tool turret head (62A) relative to the turret axis of the first tool turret head (62A) such that a receptacle can respectively be oriented to the second working spindle (22) by orienting another, opposing receptacle to the first working spindle (21) if the turret axis of the first tool turret head (62A) is oriented transversely or perpendicularly to the spindle axes.

7. The machine tool according to any one of the preceding claims, **characterized in that**
a second tool turret head (62B) of the two tool turret heads has a plurality of receptacles for receiving tools (T) or tool-retaining tool retainers (62b), wherein the first tool carrier (62) is arranged to orient a receptacle of the second tool turret head (62B) to a workpiece received at one of the working spindles by rotating the second tool turret head (62B) around the turret axis of the second tool turret head (62B),
wherein the receptacles are respectively disposed in pairs on opposing sides on the second tool turret head (62B) relative to the turret axis of the second tool turret head (62B) such that a receptacle can respectively be oriented to the first working spindle (21) by orienting another, opposing receptacle to the second working spindle (22) if the turret axis of the second tool turret head (62B) is oriented transversely or perpendicularly to the spindle axes.

8. The machine tool according to claim 6 and claim 7, **characterized in that**
a receptacle of the first tool turret head (62A) can be oriented to a workpiece (W1) received at the first working spindle (21) by orienting a receptacle of the second tool turret head (62B) to a workpiece (W2) received at the second working spindle (22) if the turret axes of the two tool turret heads (62A, 62B) are oriented parallel to the spindle axes.

9. The machine tool according to any one of the preceding claims, **characterized in that**
the machine rack (1) includes a first carrier section (1a) having a first tool carrier side (WTS1), a second carrier section (1b) having a second tool carrier side (WTS2) and a center section (1c) disposed between the first and the second carrier section, which has a third tool carrier side (WTS3),
wherein the first tool carrier side (WTS1) of the first carrier section (1a) and the second tool carrier side (WTS2) of the second carrier section (1b) are disposed on a same first side of the machine rack (1), and the third tool carrier side (WTS3) of the center section (1c) is disposed on a second side of the machine rack (1) disposed substantially perpendicularly or obliquely to the first side of the machine rack (1).

10. The machine tool according to claim 9, **characterized in that**
the first working spindle (21) is disposed on the first carrier section (1a) and the second working spindle (22) is disposed on the second carrier section (1b).

11. The machine tool according to claim 9 or 10, **characterized in that**
a first tool carrier slide (52) movable transversely to the spindle axes is disposed on the third tool carrier side (WTS3) of the center section (1c), wherein the first tool carrier (62) is disposed on the first tool carrier slide (52),
wherein the center section (1c) has a recess between a first and a second guide, into which a housing (52a) of the rotary axis of the first tool carrier (62) extends.

12. The machine tool according to any one of claims 9 to 11, **characterized by**
- a second tool carrier slide (51) disposed on the first tool carrier side (WTS1) of the first carrier section (1a), on which a second tool carrier (61) is disposed, and/or
- a third tool carrier slide (53) disposed on the second tool carrier side (WTS2) of the second carrier section (1b), on which a third tool carrier (63) is disposed,
wherein the second and/or the third tool carrier slide (51; 53) are movable parallel or transversely or perpendicularly to the spindle axes, and wherein the second and/or the third tool carrier (61; 63) are movable in a first direction (X1; X2) transverse to the spindle axes, movable in a second direction (Y1; Y2) transverse to the first direction (X1; X2) and transverse to the spindle axes and/or movable in a third direction (Z1; Z2) parallel to the spindle axes.

13. The machine tool according to claim 12, **characterized in that**
the second and/or the third tool carrier (61; 63) are formed as a tool turret, which includes a tool-carrying turret head rotatably supported around a turret axis oriented parallel to the spindle axes.

14. The machine tool according to any one of claims 9 to 13, **characterized in that**
the first tool carrier side (WTS1) of the first carrier section (1a) and the second tool carrier side (WTS2) of the second carrier section (1b) substantially span a first plane and the third tool carrier side (WTS3) of the center section (1c) substantially spans a second plane oriented perpendicularly or obliquely to the first plane,
wherein the second plane is indented towards the machine rack (1) relative to the second side of the first and second carrier sections (1a, 1b) of the machine rack (1).

## Revendications

1. Machine-outil, comportant :
- un bâti de machine (1) ;
- une première broche de travail (21) agencée sur le bâti de machine (1) et destinée à recevoir une première pièce à usiner (W1) ; et
- une seconde broche de travail (22) dirigée vers la première broche de travail (21), agencée sur le bâti de machine (1) et destinée à recevoir une seconde pièce à usiner (W2), l'axe de la seconde broche de travail (22) étant aligné coaxialement par rapport à l'axe de la première broche de travail (21) ;
- un premier porte-outil (62) agencé entre les broches de travail (21, 22) alignées coaxialement l'une par rapport à l'autre et pourvu de deux tourelles revolvers (62A, 62B) portant des outils, qui sont montées rotatives autour d'axes de revolvers respectifs alignés parallèlement ou coaxialement l'un par rapport à l'autre,
**caractérisée par** un axe de rotation (B) à commande numérique pour faire tourner le premier porte-outil (62) ;
les deux tourelles revolvers (62A, 62B) étant agencées relativement par rapport à l'axe de rotation de l'axe rotatif (B) sur des côtés opposés du premier porte-outil (62) ;
et l'axe rotatif (B) étant aligné transversalement ou perpendiculairement aux axes de la première et de la seconde broches de travail (21, 22), et les axes des tourelles revolvers (62A, 62B) étant alignés transversalement ou perpendiculairement à l'axe de rotation de l'axe rotatif (B).

2. Machine-outil selon la revendication 1, **caractérisée en ce que**
les axes des deux tourelles revolvers (62A, 62B) du premier porte-outil (62) sont susceptibles d'être alignés transversalement aux axes de la première et de la seconde broches de travail (21, 22) par rotation du premier porte-outil (62) autour de l'axe rotatif (B),
les axes des deux tourelles revolvers (62A, 62B) du premier porte-outil (62) sont susceptibles d'être alignés parallèlement aux axes de la première et de la seconde broches de travail (21, 22) par rotation du premier porte-outil (62) autour de l'axe rotatif (B), et/ou
les axes des deux tourelles revolvers (62A, 62B) du premier porte-outil (62) sont susceptibles d'être alignés à des angles quelconques par rapport aux axes de la première et de la seconde broches de travail (21, 22) par rotation du premier porte-outil (62) autour de l'axe rotatif.

3. Machine-outil selon la revendication 1 ou 2, **caractérisée en outre par**
un axe linéaire à commande numérique pour déplacer les deux tourelles revolvers (62A, 62B) en direction (Y2) parallèlement a l'axe de rotation de l'axe rotatif (B) du premier porte-outil (62).

4. Machine-outil selon l'une des revendications précédentes, **caractérisée en ce que**
le premier porte-outil (62) est conçu pour aligner un outil maintenu sur le premier porte-outil (62) avec une première pièce (W1) reçue sur la première broche de travail (21), en vue d'usiner la pièce.

5. Machine-outil selon l'une des revendications précédentes, **caractérisée par**
un premier chariot porte-outil (52) agencé sur le bâti de machine (1), sur lequel est agencé le premier porte-outil (62),
le premier chariot porte-outil (52) étant mobile dans une première direction (X2) transversalement ou perpendiculairement à l'axe de la première broche de travail.

6. Machine-outil selon l'une des revendications précédentes, **caractérisée en ce que**
une première tourelle revolver (62A) parmi les deux tourelles revolvers présente une pluralité de logements pour loger des outils (T) ou des supports d'outil (62a) retenant des outils, le premier porte-outil (62) étant conçu pour aligner un logement de la première tourelle revolver (62A) sur une pièce à usiner logée sur l'une des broches de travail par rotation de la première tourelle revolver (62A) autour de l'axe de la première tourelle revolver (62A),
les logements étant agencés respectivement par paire par rapport à l'axe de la première tourelle revolver (62A) sur des côtés opposés sur la première tourelle revolver (62A), de telle sorte qu'un logement respectif est susceptible d'être aligné avec la seconde broche de travail (22) en alignant un autre logement opposé avec la première broche de travail (21) lorsque l'axe de revolver de la première tourelle revolver (62A) est aligné transversalement ou perpendiculairement par rapport aux axes de broche.

7. Machine-outil selon l'une des revendications précédentes, **caractérisée en ce que**
une seconde tourelle revolver (62B) parmi les deux tourelles revolvers présente une pluralité de logements pour loger des outils (T) ou des supports d'outil (62b) retenant des outils, le premier porte-outil (62) étant conçu pour aligner un logement de la seconde tourelle revolver (62B) sur une pièce à usiner logée sur l'une des broches de travail par rotation de la seconde tourelle revolver (62B) autour de l'axe de revolver la seconde tourelle revolver (62B),
les logements étant agencés respectivement par paire par rapport à l'axe de la seconde tourelle revolver (62B) sur des côtés opposés sur la seconde tourelle revolver (62B), de telle sorte qu'un logement respectif est susceptible d'être aligné avec la seconde broche de travail (21) en alignant un autre logement opposé avec la seconde broche de travail (22) lorsque l'axe de revolver de la seconde tourelle revolver (62B) est aligné transversalement ou perpendiculairement par rapport aux axes de broche.

8. Machine-outil selon la revendication 6 ou la revendication 7, **caractérisée en ce que**
un logement de la première tourelle revolver (62A) est susceptible d'être aligné sur une pièce à usiner (W1) logée sur la première broche de travail (21), en alignant un logement de la seconde tourelle revolver (62B) sur une pièce à usiner (W2) logée sur la seconde broche de travail (22) lorsque les axes des deux tourelles revolvers (62A, 62B) sont alignées parallèlement aux axes de broche.

9. Machine-outil selon l'une des revendications précédentes, **caractérisée en ce que**
le bâti de machine (1) comprend un premier tronçon porteur (1 a) présentant une première face porte-outil (WTS1), un second tronçon porteur (1b) présentant une seconde face porte-outil (WTS2), et un tronçon central (1c) agencé entre le premier et le second tronçons porteurs, qui présente une troisième face porte-outil (WTS3),
la première face porte-outil (WTS1) du premier tronçon porteur (1a) et la seconde face porte-outil (WTS2) du second tronçon porteur (1b) étant agencées sur un même premier côté du bâti de machine (1), et la troisième face porte-outil (WTS3) du tronçon central (1c) est agencée sur un second côté du bâti de machine (1) agencé sensiblement perpendiculairement ou en oblique par rapport au premier côté du bâti de machine (1).

10. Machine-outil selon la revendication 9, **caractérisée en ce que**
la première broche de travail (21) est agencée sur le premier tronçon porteur (1a) et la seconde broche de travail (22) est agencée sur le second tronçon porteur (1b).

11. Machine-outil selon la revendication 9 ou 10, **caractérisée en ce que**
un premier chariot porte-outil (52) mobile transversalement aux axes de broche est agencé sur la troisième face porte-outil (WTS3) du tronçon central (1c), le premier porte-outil (62) étant agencé sur le premier chariot porte-outil (52),
le tronçon central (1c) présentant un évidement entre un premier et un second guidage, évidement dans lequel vient s'étendre un boîtier (52a) de l'axe rotatif du premier porte-outil (62).

12. Machine-outil selon l'une des revendications 9 à 11, **caractérisée par**
- un second chariot porte-outil (51) agencé sur la première face porte-outil (WTS1) du premier tronçon porteur (1a), sur lequel est agencé un second porte-outil (61), et/ou
- un troisième chariot porte-outil (53) agencé sur la seconde face porte-outil (WTS2) du second tronçon porteur (1b), sur lequel est agencé un troisième porte-outil (63),
le second et/ou le troisième chariot porte-outil (51 ; 53) étant mobile parallèlement ou transversalement ou perpendiculairement aux axes de broche, et le second et/ou le troisième porte-outil (61 ; 63) étant mobile dans une première direction (X1 ; X2) transversalement aux axes de broche, dans une seconde direction (Y1 ; Y2) transversalement à la première direction (X1 ; X2) et transversalement aux axes de broche et/ou dans une troisième direction (Z1 ; Z2) parallèlement aux axes de broche.

13. Machine-outil selon la revendication 12, **caractérisée en ce que**
le second et/ou le troisième porte-outil (61 ; 63) est réalisé sous forme de revolver d'outil qui comprend une tourelle revolver porte-outil montée rotative autour d'un axe de revolver alignée parallèlement aux axes de broche.

14. Machine-outil selon l'une des revendications 9 à 13, **caractérisée en ce que**
la première face porte-outil (WTS1) du premier tronçon porteur (1a) et la seconde face porte-outil (WTS2) du second tronçon porteur (1 b) définissent sensiblement un premier plan, et la troisième face porte-outil (WTS3) du tronçon central (1c) définit sensiblement un second plan aligné perpendiculairement ou en oblique par rapport au premier plan,
le second plan étant rétracté vers le bâti de machine (1) par rapport à la seconde face des premier et second tronçons porteurs (1 a, 1 b) du bâti de machine (1).
